# EUROPÄISCHE PATENTSCHRIFT

(11) **EP 3 956 113 B1**
(45) Veröffentlichungstag und Bekanntmachung des Hinweises auf die Patenterteilung: **07.01.2026**
(21) Anmeldenummer: 20726809.5
(22) Anmeldetag: 18.05.2020
(51) Int. Cl.: B25J 15/02, B25J 15/04

(54) **GREIFVORRICHTUNG**
GRIPPING APPARATUS
DISPOSITIF DE PRÉHENSION

(30) Priorität: 03.07.2019 DE 102019209755
(43) Veröffentlichungstag der Anmeldung: 23.02.2022
(73) Patentinhaber: Festo SE & Co. KG, 73734 Esslingen (DE)
(72) Erfinder: AEGERTER, Markus, 73776 Altbach (DE)
(74) Vertreter: Patentanwälte Magenbauer & Kollegen Partnerschaft mbB
(86) Internationale Anmeldenummer: PCT/EP2020/063800
(87) Internationale Veröffentlichungsnummer: WO 2021/001088

(56) Entgegenhaltungen:
- EP-A1- 3 486 043
- JP-A- S58 217 634
- JP-A- S61 117 087
- JP-B1- S4 838 594
- US-A- 4 852 242

## Beschreibung

Die Erfindung betrifft eine Greifvorrichtung, mit einem Grundkörper und mehreren an dem Grundkörper um eine Zentrumsachse herum verteilt angeordneten Greifarmen, wobei jeder Greifarm unter Ausführung einer Greifarm-Schwenkbewegung relativ zu dem Grundkörper um einen Schwenkbereich verschwenkbar ist und sämtliche Greifarme durch eine Betätigungseinrichtung der Greifvorrichtung synchron wahlweise zu einer nach innen in Richtung zu der Zentrumsachse orientierten Einwärts-Schwenkbewegung oder zu einer nach außen von der Zentraumachse weg orientierten Auswärts-Schwenkbewegung antreibbar sind, wobei die Greifarme in eine bezüglich dem Grundkörper separate Greifeinheit integriert sind, die eine sämtliche Greifarme tragende Befestigungshülse aufweist und die mit einem hülsenförmigen Befestigungsabschnitt der Befestigungshülse in der Achsrichtung der Zentrumsachse auf den Grundkörper aufgesteckt und in einer dadurch eingenommenen Gebrauchsstellung durch eine Sicherungseinrichtung an dem Grundkörper lösbar fixiert ist, wobei die Sicherungseinrichtung von mindestens einer Verriegelungseinrichtung gebildet ist, die eine am Grundkörper angeordnete erste Verriegelungsstruktur und eine an dem hülsenförmigen Befestigungsabschnitt der Befestigungshülse angeordnete, zu der ersten Verriegelungsstruktur komplementäre zweite Verriegelungsstruktur aufweist, wobei eine der beiden Verriegelungsstrukturen unbeweglich und die andere Verriegelungsstruktur zum Ausführen eines Verriegelungsvorganges und eines Entriegelungsvorganges beweglich ist.

Eine aus der JP S58 217634 A bekannte Greifvorrichtung dieser Art hat einen drehbar gelagerten Hauptkörper, an dem mittels eines L-förmigen Schwenkhebels, der durch einen Hydraulikzylinder betätigt wird, eine eingesteckte Düse fixiert ist.

Die JP S48 38594 B1 und die EP 3 486 043 A1 beschreiben jeweils eine Greifvorrichtung mit einem länglichen Grundkörper, auf dem eine Hülse sitzt, an der mehrere Greifarme schwenkbeweglich gelagert sind.

Die JP S61 117087 A offenbart eine Befestigungs-/Lösevorrichtung, die für die automatische Befestigung/Lösung einer Hand an einem Roboter geeignet ist.

Die US 4 852 242 A offenbart einen Kupplungsmechanismus, mit dem eine Roboterhand durch die Bewegung der Roboterhand relativ zu einem Werkzeugständer an anwendungsspezifische Werkzeuge angekoppelt und von diesen entkoppelt werden kann.

Die DE 11 2018 004 732 T5 offenbart eine Greifvorrichtung, die zum Sicherstellen eines ausreichenden Haltevermögens beim Greifen eines weichen tütenartigen Gegenstands in der Lage ist. Die Greifvorrichtung weist einen Basisteil, einen Verlagerungsteil, der bezüglich des Basisteils verlagert werden kann, Fingerteile, die dahingehend an einem Ziel-Greifgegenstand anliegen können, den Ziel-Greifgegenstand zu greifen, und einen Antriebsteil, der die Fingerteile antreibt, auf. Die Fingerteile werden dahingehend von dem Verlagerungsteil unterstützt, ihre Bewegung in einer Richtung, in der sie sich einander annähern, zu ermöglichen.

Eine aus der DE 30 11 837 A1 bekannte Greifvorrichtung hat zwei sich gegenüberliegende Greifarme, die individuell an zwei einander entgegengesetzten Seitenflächen eines als Metallblock ausgebildeten Halterungsteils mittels Schrauben befestigt sind. Jeder Greifarm umfasst eine in Längsrichtung mehrfach abgeknickte Blattfeder und ist mittels einer mechanischen Betätigungseinrichtung verschwenkbar. Die mechanische Betätigungseinrichtung hat einen an dem Halterungsteil befestigten Pneumatikzylinder, an dessen Kolbenstange mehrere Druckelemente befestigt sind, die bei einer Linearbewegung der Kolbenstange an der Außenfläche der Blattfedern abrollen können. Eine aufeinander zu gerichtete Einwärts-Schwenkbewegung der Greifarme resultiert aus der mechanischen Beaufschlagung seitens der durch den Pneumatikzylinder in einer ersten axialen Richtung bewegten Druckelemente. Eine entgegengesetzte Auswärts-Schwenkbewegung der Greifarme ergibt sich aus der Eigenfederkraft der Blattfedern, wenn die Druckelemente in einer zu der ersten Richtung entgegengesetzten zweiten Richtung zurückbewegt werden. Ein Auswechseln der Greifarme dürfte dadurch möglich sein, dass die jeweils zugeordnete Schraubverbindung gelöst wird. Die damit verbundene Handhabung ist relativ aufwendig.

Aus der DE 10 2004 059 342 A1 ist eine Greifvorrichtung bekannt, die mehrere in sich starre Greifarme hat, die unabhängig voneinander in einem von einem Gelenk gebildeten Schwenkbereich an einem Grundkörper verschwenkbar gelagert sind. Mittels einer permanentmagnetischen Betätigungseinrichtung können die Greifarme synchron zu einer einwärts oder auswärts gerichteten Schwenkbewegung angetrieben werden. Die permanentmagnetische Betätigungseinrichtung hat eine äußere Permanentmagnetanordnung mit an den Greifarmen angeordneten äußeren Permanentmagneten und verfügt ferner über eine innere Permanentmagnetanordnung, die axial bewegbar an dem Grundkörper angeordnet ist und sich aus mehreren inneren Permanentmagneteinheiten zusammensetzt. Abhängig von der Position der inneren Permanentmagnetanordnung stoßen sich die inneren und äußeren Permanentmagneteinheiten gegenseitig ab oder ziehen sich an, so dass die Greifarme entweder eine Auswärts-Schwenkbewegung oder eine Einwärts-Schwenkbewegung ausführen. Zu seiner schwenkbaren Lagerung sitzt jeder Greifarm schwenkbeweglich auf einem am Grundkörper fixierten Lagerzapfen.

Der Erfindung liegt die Aufgabe zugrunde, eine Greifvorrichtung zu schaffen, die bei einfachem und kostengünstigem Aufbau eine nutzerfreundliche Anwendung ermöglicht.

Zu Lösung dieser Aufgabe ist in Verbindung mit den eingangs genannten Merkmalen erfindungsgemäß vorgesehen, dass die Verriegelungseinrichtung als Schnappverbindungseinrichtung ausgebildet ist, wobei die bewegliche erste oder zweite Verriegelungsstruktur zum Entriegeln federelastisch auslenkbar ist.

Auf diese Weise sind alle Greifarme der Greifvorrichtung in einer einheitlich handhabbaren, als Greifeinheit bezeichneten Baueinheit zusammengefasst, die bezüglich dem Grundkörper der Greifvorrichtung separat ausgebildet ist und sehr einfach durch einen Aufsteckvorgang an dem Grundkörper fixierbar oder fixiert ist, um die Greifvorrichtung mit den für einen Greifvorgang gewünschten Greifarmen auszustatten. Die Fixierung der Greif-einheit an dem Grundkörper erfolgt mittels einer Befestigungshülse der Greifeinheit, an der alle Greifarme in verschwenkbarer Weise angebracht sind. Die Befestigungshülse hat einen hülsenförmigen Befestigungsabschnitt, mit dem die Greifeinheit in der Achsrichtung der Zentrumsachse auf den Grundkörper aufsteckbar ist, um die Greifeinheit in ihre Gebrauchsstellung am Grundkörper zu verbringen. Die aufgesteckte Greifeinheit ist durch eine Sicherungseinrichtung in lösbarer Weise an dem Grundkörper fixiert, so dass sie jederzeit auch wieder vom Grundkörper abgenommen werden kann, um beispielsweise durch Auswechseln eine rasche Umrüstung bezüglich einer anderen Greifaufgabe vorzunehmen. Es besteht die vorteilhafte Möglichkeit, mehrere Greifeinheiten mit untereinander identischen Befestigungshülsen, jedoch voneinander abweichend gestalteten Greifarmen bereitzustellen, die von Fall zu Fall abhängig von den Greiferfordernissen in die Gebrauchsstellung am Grundkörper aufsteckbar sind. Die lösbare Fixierung der Greifeinheit gestattet auch einen schnellen Austausch im Schadensfall, so dass die Stillstandszeiten bei der Anwendung der Greifvorrichtung auf ein Minimum reduziert werden können. In diesem Zusammenhang ist es vorteilhaft, wenn die Montage und Demontage der Greifeinheit rein manuell und insbesondere auch werkzeuglos möglich ist.

Die Sicherungseinrichtung ist von mindestens einer Verriegelungseinrichtung gebildet. Eine einzige Verriegelungseinrichtung wird bevorzugt, wenngleich mehrere Verriegelungseinrichtungen um die Zentrumsachse herum verteilt angeordnet sein können. Die Verriegelungseinrichtung hat eine am Grundkörper angeordnete erste Verriegelungsstruktur und eine an dem hülsenförmigen Befestigungsabschnitt der Befestigungshülse angeordnete zweite Verriegelungsstruktur, wobei die beiden Verriegelungsstrukturen komplementär zueinander ausgebildet sind, so dass sie in einen lösbaren Verriegelungseingriff miteinander gelangen können. Eine der beiden Verriegelungsstrukturen ist unbeweglich ausgebildet, während die andere Verriegelungsstruktur beweglich ist, um bei Bedarf einen Verriegelungsvorgang oder einen Entriegelungsvorgang bezüglich der unbeweglichen Verriegelungsstruktur ausführen zu können. Die Verriegelungseinrichtung ist als Schnappverbindungseinrichtung ausgebildet. Auf diese Weise können die beiden Verriegelungsstrukturen selbsttätig in einen verrastenden Eingriff miteinander gelangen, wenn die Greifeinheit in die Gebrauchsstellung auf den Grundkörper aufgesteckt wird. Die bewegliche Verriegelungsstruktur kann zum Entriegeln federelastisch ausgelenkt werden. Beispielsweise kann die bewegliche Verriegelungsstruktur so federnd an dem hülsenförmigen Befestigungsabschnitt fixiert sein, dass sie normalerweise eine Verriegelungsstellung einnimmt und von Hand, gegebenenfalls unter Verwendung eines manuell betätigbaren Hebelwerkzeuges, unter Überwindung einer federnden Rückstellkraft in eine Entriegelungsstellung auslenkbar und insbesondere verschwenkbar ist.

Vorteilhafte Weiterbildungen der Erfindung gehen aus den Unteransprüchen hervor.

Als besonders zweckmäßig wird es erachtet, wenn die Befestigungshülse und der Grundkörper derart aufeinander abgestimmt gestaltet sind, dass die Befestigungshülse zur Einnahme ihrer Gebrauchsstellung durch eine rein lineare Aufsteckbewegung in der Achsrichtung der Zentrumsachse auf den Grundkörper aufsteckbar ist. Eine Demontage ist in diesem Fall bevorzugt durch eine entgegengesetzt orientierte, rein lineare Abziehbewegung der Greifeinheit durchführbar. Verglichen mit einer prinzipiell ebenfalls möglichen Ausgestaltung, bei der die Aufsteckbewegung eine kombinierte Steck-Drehbewegung ist, vergleichbar einer Bajonettverbindung, ist die rein lineare Montagerichtung und Demontagerichtung besonders kostengünstig realisierbar.

Die für die Sicherung der aufgesteckten Gebrauchsstellung verantwortliche Sicherungseinrichtung ist vorzugsweise so ausgebildet, dass sie zwischen dem Grundkörper und dem hülsenförmigen Befestigungsabschnitt der Befestigungshülse wirksam ist. Die Greifarme leisten hierbei zur Sicherung der Gebrauchsstellung keinen Beitrag.

Bevorzugt ist die am Grundkörper angeordnete erste Verriegelungsstruktur unbeweglich ausgebildet, während es sich bei der am hülsenförmigen Befestigungsabschnitt der Befestigungshülse angeordneten zweiten Verriegelungsstruktur um eine bewegliche Verriegelungsstruktur handelt. Die zur Befestigungshülse gehörende bewegliche zweite Verriegelungsstruktur ist für ihre manuelle Handhabung bequem von außen her zugänglich.

Die Greifvorrichtung ist zweckmäßigerweise mit mindestens einer Linearführungseinrichtung ausgestattet, die zwischen dem Grundkörper und dem hülsenförmigen Befestigungsabschnitt der Befestigungshülse wirksam ist und durch die die Befestigungshülse beim axialen Aufstecken auf den Grundkörper ebenso wie beim axialen Abziehen von dem Grundkörper relativ zu dem Grundkörper linear verschiebbar geführt ist. Die Linearführungseinrichtung bewirkt eine Querabstützung in der Umfangsrichtung der Zentrumsachse, so dass eine sehr exakte Montage und Demontage der Greifeinheit möglich ist und jederzeit gewährleistet ist, dass die Greifeinheit - auch in der Gebrauchsstellung - bezüglich des Grundkörpers um die Zentrumsachse unverdrehbar abgestützt ist. Damit ist bei der Nutzung der Greifvorrichtung gewährleistet, dass selbst bei hohen Querkräften oder Torsionskräften eine Relativverdrehung zwischen der Greifeinheit und dem Grundkörper vermieden ist.

Während ihrer Nutzung ist die Greifvorrichtung zweckmäßigerweise über den Grundkörper an einem Roboter oder an einem sonstigen Handhabungsgerät fixiert. Der Grundkörper ist zu diesem Zweck mit mindestens einer mechanischen Befestigungsschnittstelle ausgestattet.

Die Linearführungseinrichtung hat zweckmäßigerweise eine in einer bezüglich der Zentrumsachse nach radial außen weisenden Außenumfangsfläche des Grundkörpers ausgebildete, sich in der Achsrichtung der Zentrumsachse erstreckende Führungsnut und verfügt darüber hinaus über eine gleitverschieblich in die Führungsnut eingreifende Führungsrippe, die an einer radialen Innenumfangsfläche des hülsenförmigen Befestigungsabschnittes der Befestigungshülse ausgebildet ist. Diese Anordnung kann auch vertauscht sein, so dass die Führungsrippe am Außenumfang des Grundkörpers und die Führungsnut am Innenumfang des hülsenförmigen Befestigungsabschnittes ausgebildet ist.

Wenn die Greifvorrichtung mit sowohl einer Verriegelungseinrichtung als auch einer Linearführungseinrichtung ausgestattet ist, ist es vorteilhaft, wenn die erste Verriegelungsstruktur im Längsverlauf der Führungsnut der Linearführungseinrichtung und die zweite Verriegelungsstruktur im Längsverlauf der Führungsrippe der Linearführungseinrichtung angeordnet ist. Die Funktionen der Verriegelung und der Linearführung können auf diese Weise auf geringem Bauraum zusammengefasst werden.

Die Innenumfangsfläche des hülsenförmigen Befestigungsabschnittes und zumindest der in der Gebrauchsstellung von dem hülsenförmigen Befestigungsabschnitt umschlossene Abschnitt der Außenumfangsfläche des Grundkörpers sind vorzugsweise komplementär zueinander ausgebildet, so dass der hülsenförmige Befestigungsabschnitt ringsum sehr gut in radialer Richtung bezüglich des Grundkörpers abgestützt ist. Bevorzugt sind die besagten Flächen kreiszylindrisch ausgebildet.

Für den Nutzer der Greifvorrichtung ist es vorteilhaft, wenn er über den aktuellen Betriebszustand in Kenntnis gesetzt wird. Hierzu kann die Greifvorrichtung mit einer mindestens einen Betriebszustand visualisierenden Leuchtanzeigeeinrichtung ausgestattet sein. Diese Leuchtanzeigeeinrichtung befindet sich zweckmäßigerweise gut geschützt untergebracht im Innern des Grundkörpers. Damit die Lichtsignale von außen her erkennbar sind, ist der hülsenförmige Befestigungsabschnitt der Befestigungshülse von mindestens einem Sichtfenster durchsetzt, das einen Lichtdurchtritt ermöglicht. Das Sichtfenster kann offen sein, jedoch kann es alternativ in lichtdurchlässiger Weise verschlossen sein. Bevorzugt sind um die Zentrumsachse herum mehrere Sichtfenster in dem hülsenförmigen Befestigungsabschnitt ausgebildet, so dass der aktuelle Betriebszustand aus mehreren Blickrichtungen erkennbar ist. Die Leuchtanzeigeeinrichtung kann beispielsweise mit unterschiedlichen Lichtfarben signalisieren, ob die Greifarme eine Offenstellung oder eine Schließstellung einnehmen oder ob eine Betriebsstörung vorliegt.

Die Leuchtanzeigeeinrichtung wird zweckmäßigerweise unter Verwendung einer oder mehrerer LEDs verwirklicht.

Zugunsten einer hohen Stabilität weist die Befestigungshülse an einer axialen Vorderseite zweckmäßigerweise einen geschlossenen Bodenabschnitt auf, der dem Grundkörper axial vorgelagert ist, wenn die Greifeinheit ihre Gebrauchsstellung einnimmt.

Jeder Greifarm hat zweckmäßigerweise einen hinteren Endabschnitt, mit dem er unter Definition des zugeordneten Schwenkbereiches schwenkbeweglich an dem hülsenförmigen Befestigungsabschnitt der Befestigungshülse fixiert ist. Ausgehend von diesem hinteren Endabschnitt erstreckt sich jeder Greifarm axial nach vorne, wobei er mit einem vorderen Endabschnitt nach vorne über die Befestigungshülse hinausragt. Der vordere Endabschnitt der Befestigungshülse fungiert als Greifabschnitt, der an ein Objekt anlegbar ist, um es für einen nachfolgenden Transport zu ergreifen. Der Greifabschnitt kann einstückig in den Greifarm integriert sein, kann aber auch lösbar angeordnet sein, so dass er bei Bedarf leicht ausgewechselt werden kann.

Die Greifelemente sind bei einer als besonders günstig angesehenen Ausführungsform so ausgebildet, dass sie an ihrem hinteren Endabschnitt unter Bildung eines Festkörpergelenkes einstückig und biegeflexibel mit dem hülsenförmigen Befestigungsabschnitt verbunden sind. Gegenüber einer prinzipiell auch möglichen Ausführungsform des Schwenkbereiches, der als Gelenk mit relativ zueinander beweglichen Teilen ausgeführt ist, hat die Realisierung als integrales Festkörpergelenk den Vorteil, dass bei der Greifarm-Schwenkbewegung keine Reibung auftritt, was den Verschleiß minimiert und Abrieb vermeidet. Letzteres prädestiniert die Greifvorrichtung für Einsätze in Reinraumanwendungen und/oder im Laborbereich.

Zumindest im Bereich des biegeflexiblen Festkörpergelenkes ist jeder Greifarm zweckmäßigerweise lamellenartig und/oder nach Art einer Blattfeder gestaltet. Das Festkörpergelenk kann eine sehr hohe Elastizität haben, so dass der verschwenkbare Greifarm mit sehr geringer Kraft quer zu seiner Längsrichtung ausgelenkt werden kann.

Die Befestigungshülse hat zweckmäßigerweise einen hülsenförmigen vorderen Hülsenendabschnitt, dessen Wandung von mehreren um die Zentrumsachse herum verteilten, sich in der Längsrichtung der Befestigungshülse erstreckenden Längsschlitzen durchgesetzt ist, in denen sich jeweils einer der Greifarme erstreckt. Anzahl und winkelmäßige Verteilung der Längsschlitze bezüglich der Zentrumsachse entsprechen also derjenigen der Greifarme. Der vordere Hülsenendabschnitt trägt zur Stabilität der Befestigungshülse bei, wobei die Längsschlitze gewährleisten, dass die Greifarme bei ihrer Einwärts-Schwenkbewegung sehr weit nach radial innen verschwenkt werden können. Dadurch ist ein großer Schwenkbereich realisierbar, was das Ergreifen sowohl kleiner als auch großer Objekte ermöglicht.

Der bereits angesprochene optionale Bodenabschnitt der Befestigungshülse ist zweckmäßigerweise vorne an dem vorderen Hülsenendabschnitt angebracht, wobei er insbesondere einstückig mit diesem vorderen Hülsenendabschnitt ausgeführt ist.

Die gesamte Befestigungshülse ist zweckmäßigerweise einstückig ausgebildet. Vorteilhaft ist es, wenn die Greifarme einstückig an dem hülsenförmigen Befestigungsabschnitt angebracht sind, so dass die gesamte Greifeinheit einstückig ausgebildet sein kann. Die Greifeinheit besteht vorzugsweise insgesamt aus einem Kunststoffmaterial.

Die Betätigungseinrichtung der Greifvorrichtung kann grundsätzlich auf einem beliebigen Funktionsprinzip basieren. Beispielsweise kann die Betätigungseinrichtung ausgebildet sein, um die Greifarm-Schwenkbewegung durch mechanische Einwirkung hervorzurufen. Hierbei kann die Betätigungseinrichtung beispielsweise eine durch eine Antriebseinheit bewegliche Betätigungseinheit aufweisen, die mechanisch kraftübertragend mit den vorhandenen Greifarmen gekoppelt ist.

Als besonders vorteilhaft wird allerdings eine Ausgestaltung der Betätigungseinrichtung als permanentmagnetische Betätigungseinrichtung angesehen. Eine solche permanentmagnetische Betätigungseinrichtung hat insbesondere eine äußere Permanentmagnetanordnung, die an den Greifarmen angeordnet ist, sowie eine innere Permanentmagnetanordnung, die Bestandteil einer relativ zum Grundkörper und zu den Greifarmen beweglichen Betätigungseinheit ist. Die äußere Permanentmagnetanordnung enthält eine Mehrzahl von äußeren Permanentmagneteinheiten, wobei jeder Greifarm mit einer solchen äußeren Permanentmagneteinheit ausgestattet ist. Die Betätigungseinheit lässt sich unter Ausführung einer Arbeitsbewegung in unterschiedlichen Arbeitsstellungen positionieren, um die äußeren Permanentmagneteinheiten zum Hervorrufen der Greifarm-Schwenkbewegung entweder magnetisch anzuziehen oder magnetisch abzustoßen.

Als besonders vorteilhaft wird eine Ausführungsform angesehen, bei der die Arbeitsbewegung der Betätigungseinheit eine rotative Arbeitsbewegung um eine mit der Zentrumsachse gleichgerichtete Drehachse ist, wobei die innere Permanentmagnetanordnung eine Mehrzahl von um die Drehachse herum verteilt angeordneten inneren Permanentmagneteinheiten aufweist, deren bezüglich der äußeren Permanentmagneteinheiten eingenommene Relativposition unter Veränderung der zwischen den inneren Permanentmagneteinheiten und den äußeren Permanentmagneteinheiten wirkenden Magnetkräfte durch die rotative Arbeitsbewegung veränderbar ist.

Ungeachtet dessen lässt sich eine permanentmagnetische Betätigungseinrichtung beispielsweise auch dahingehend realisieren, dass die Arbeitsbewegung der die innere Permanentmagnetanordnung aufweisenden Betätigungseinheit eine Linearbewegung in der Achsrichtung der Zentrumsachse ist.

Zur Erzeugung der Arbeitsbewegung der Betätigungseinheit ist die Greifvorrichtung zweckmäßigerweise mit einer elektrisch oder durch Fluidkraft betriebenen Antriebseinheit ausgestattet, die an oder in dem Grundkörper angebracht ist und die mit der Betätigungseinheit antriebsmäßig gekoppelt ist. Bei der Antriebseinheit handelt es sich vorzugsweise um eine Drehantriebseinheit.

Zweckmäßigerweise enthält eine elektrische Antriebseinheit einen Elektromotor, der als Schrittmotor oder Servomotor ausgebildet ist. Beispielsweise kann es sich um einen programmierbaren elektrischen Servomotor handeln, mit dem sich die Betätigungseinheit variabel in unterschiedlichen Arbeitsstellungen positionieren lässt.

Der Grundkörper verfügt zweckmäßigerweise über ein Gehäuse, das eine Gehäusekammer definiert, in der die Betätigungseinheit und zweckmäßigerweise auch die bevorzugt vorhandene Antriebseinheit aufgenommen sind. Die Gehäusekammer ist zumindest im Zusammenhang mit einer permanentmagnetischen Betätigungseinrichtung peripher zweckmäßigerweise von einer nicht magnetisierbaren Gehäuse-Seitenwand begrenzt, um einen ungehinderten Durchtritt der magnetischen Feldlinien zu ermöglichen.

Es ist vorteilhaft, wenn die Greifvorrichtung mit einer zur Erfassung mindestens eines Betriebszustandes der Greifvorrichtung ausgebildeten Sensoreinrichtung ausgestattet ist. Die Sensoreinrichtung ist insbesondere in der Lage, mindestens eine und bevorzugt jede durch die Greifarm-Schwenkbewegung einstellbare Schwenkposition mindestens eines und bevorzugt jedes Greifarmes zu detektieren. Auf diese Weise ist also eine sehr einfache Stellungsabfrage der Greifarme möglich.

Die Sensoreinrichtung lässt sich besonders kostengünstig im Zusammenhang mit einer permanentmagnetischen Betätigungseinrichtung verwirklichen, indem die innere Permanentmagnetanordnung und/oder die äußere Permanentmagnetanordnung dazu verwendet werden, die Sensoreinrichtung zu aktivieren. Die Sensoreinrichtung enthält in diesem Fall zweckmäßigerweise einen oder mehrere Hall-Sensoren.

Der detektierte Betriebszustand kann beispielsweise einer elektronischen Steuereinrichtung zugeführt werden, die als ein Bestandteil der Greifvorrichtung ausgebildet sein kann. Bevorzugt sind die ermittelten Betriebszustände mittels der weiter oben erwähnten mindestens einen Leuchtanzeigeeinrichtung visualisierbar.

Die Greifeinheit lässt sich mit einer beliebigen Anzahl von Greifarmen realisieren. Beispielsweise verfügt sie über drei oder vier um die Zentrumsachse herum verteilte Greifarme, wobei es sich zweckmäßigerweise um eine gleichmäßige Verteilung handelt. Die Greifvorrichtung kann mehrere Greifeinheiten umfassen, die alternativ zueinander in der Gebrauchsstellung am Grundkörper anbringbar sind und die sich in der Anzahl ihrer Greifarme voneinander unterscheiden.

Nachfolgend wird die Erfindung anhand der beiliegenden Zeichnung näher erläutert. In dieser zeigen:
- Figur 1: eine bevorzugte Bauform der erfindungsgemäßen Greifvorrichtung in einer perspektivischen Darstellung, wobei die Greifarme bei Einnahme einer nach innen verschwenkten inneren Schwenkstellung gezeigt sind, die auch als Schließstellung bezeichnet wird,
- Figur 2: einen Längsschnitt der Greifvorrichtung gemäß Schnittlinie II-II aus Figur 1,
- Figur 3: eine Seitenansicht der Greifvorrichtung mit Blickrichtung gemäß Pfeil III aus Figur 1 in einer noch nicht auf den Grundkörper aufgesteckten Bereitschaftsstellung der Greifeinheit,
- Figur 4: einen isometrischen Längsschnitt des in Figur 3 unten liegenden Endabschnittes der Greifvorrichtung, wobei eine im Grundkörper untergebrachte Antriebseinheit nicht illustriert ist,
- Figur 5: einen Querschnitt der Greifvorrichtung gemäß Schnittlinie IV-IV aus Figur 2, wobei die Greifarme bei Einnahme der inneren Schwenkstellung bzw. Schließstellung gezeigt sind und wobei die Greifarme außerdem strichpunktiert auch bei Einnahme einer als Offenstellung bezeichneten äußeren Schwenkstellung gezeigt sind,
- Figur 6: einen Querschnitt der Greifvorrichtung gemäß Schnittlinie VI-VI aus Figur 2,
- Figur 7: einen Querschnitt der Greifvorrichtung gemäß Schnittlinie VII-VII aus Figur 2,
- Figur 8: eine Einzeldarstellung der Greifeinheit in einer Seitenansicht mit Blickrichtung gemäß Pfeil III aus Figur 1,
- Figur 9: einen Querschnitt der Greifeinheit gemäß Schnittlinie IX-IX aus Figur 8, und
- Figur 10: einen Querschnitt der Greifeinheit gemäß Schnittlinie X-X aus Figur 9.

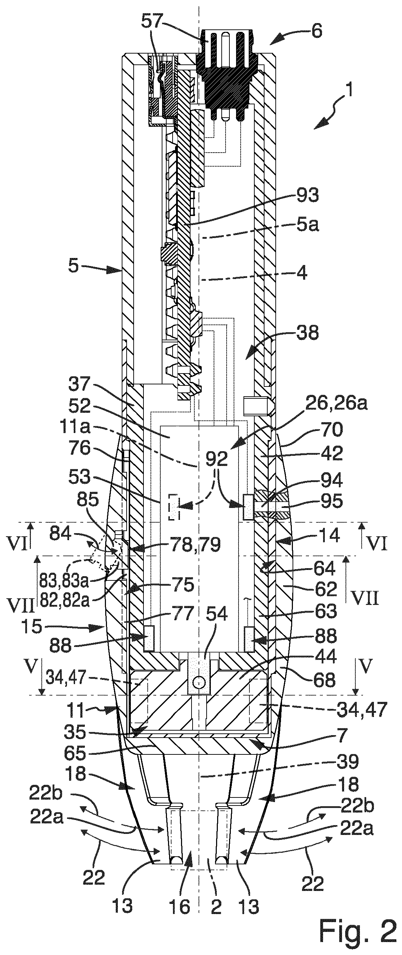

Die in der Zeichnung illustrierte Greifvorrichtung 1 ermöglicht das lösbare Greifen einzelner Objekte 2, von denen eines in Figur 2 strichpunktiert angedeutet ist.

Die Greifvorrichtung 1 hat eine mechanische Befestigungsschnittstelle 3, mit der sie am beweglichen Arm eines nicht weiter abgebildeten Roboters oder eines sonstigen Handhabungsgerätes fixierbar ist. Dadurch kann die Greifvorrichtung 1 im Raum bewegt werden, um ein Objekt 2 zu ergreifen, an eine andere Stelle zu verlagern und wieder loszulassen.

Bei den Objekten 2 kann es sich um technische Gegenstände wie Werkstücke handeln, aber auch um Nahrungsmittel oder medizinische Artikel. Diese Aufzählung ist nicht abschließend zu verstehen.

Die Greifvorrichtung 1 hat eine als Zentrumsachse 4 bezeichnete imaginäre zentrale Längsachse. Sie hat einen eine Längserstreckung aufweisenden Grundkörper 5, der sich in der Achsrichtung der Zentrumsachse 4 erstreckt und exemplarisch über eine mit der Zentrumsachse 4 zusammenfallende Längsachse 5a verfügt. Die Befestigungsschnittstelle 3 ist bevorzugt an dem Grundkörper 5 ausgebildet und besteht exemplarisch aus zwei Befestigungslöchern.

Der Grundkörper 5 hat eine in der illustrierten Ausrichtung nach oben weisende Rückseite 6 und eine diesbezüglich axial entgegengesetzte, exemplarisch nach unten weisende Vorderseite 7.

Die Greifvorrichtung 1 enthält mehrere Greifarme 18, die in einer gewissen Verteilung um die Zentrumsachse 4 herum angeordnet sind. Bevorzugt handelt es sich um eine gleichmäßige Verteilung.

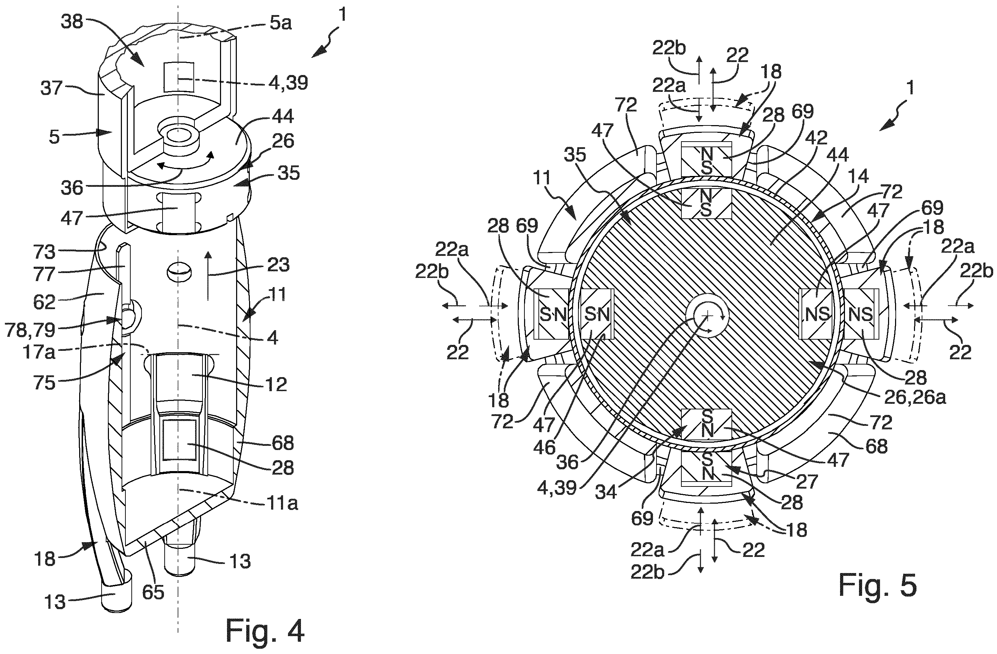

Bei dem illustrierten bevorzugten Ausführungsbeispiel ist die Greifvorrichtung 1 mit insgesamt vier Greifarmen 18 ausgestattet, die - wie besonders gut aus Figur 5 ersichtlich ist - in Winkelabständen von 90° gleichmäßig um die Zentrumsachse 4 herum verteilt sind. Bei nicht illustrierten alternativen Ausführungsbeispielen verfügt die Greifvorrichtung 1 über nur zwei oder drei solcher Greifarme 18.

Die Greifarme 18 haben eine längliche, beispielsweise fingerartige Gestalt. Sie können in ihrer Längsrichtung geradlinig oder auch einfach oder mehrfach abgebogen ausgeführt sein.

Jeder Greifarm 18 hat einen hinteren Endabschnitt 12, über den er an dem Grundkörper 5 fixiert ist. Die Fixierung erfolgt in noch zu beschreibender Weise unter Vermittlung einer Greifeinheit 11, in die die Greifarme 18 integriert sind und die ihrerseits an dem Grundkörper 5 lösbar befestigt ist.

Die hinteren Endabschnitte 12 der Greifarme 18 liegen zwischen der Rückseite 6 und der Vorderseite 7 im Bereich einer radial nach außen weisenden Außenumfangsfläche 14 des Grundkörpers 5. Ausgehend von dort erstreckt sich jeder Greifarm 18 in Richtung zu der Vorderseite 7, wobei er mit einem axial nach vorne über die Vorderseite 7 des Grundkörpers 5 hinausragenden vorderen Endabschnitt 13 frei endet. Der vordere Endabschnitt 13 wird im Folgenden aufgrund seiner Funktion auch als Greifabschnitt 13 bezeichnet. Die Funktion der Greifabschnitte 13 besteht darin, ein handzuhabendes Objekt 2 seitlich zu beaufschlagen und dadurch zu ergreifen und festzuhalten. Die Greifabschnitte 13 sämtlicher Greifarme 18 umgeben einen dem Grundkörper 5 an der Vorderseite 7 vorgelagerten Greifraum 16, in dem das zu ergreifende Objekt 2 zumindest partiell platziert ist.

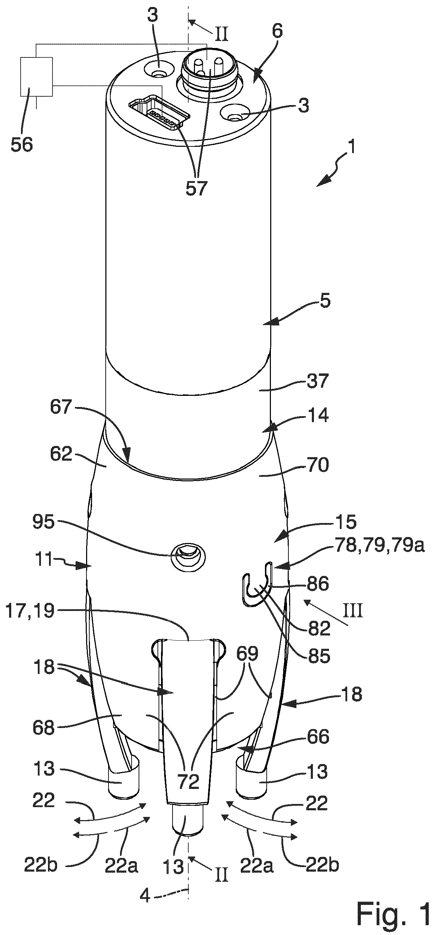

Die Greifabschnitte 13 können abhängig von der Formgebung des zu ergreifenden Objektes 2 unterschiedlich gestaltet sein. In der Zeichnung sind zwei unterschiedliche Gestaltungsmöglichkeiten illustriert. Die Figuren 1 und 4 zeigen eine Ausgestaltung mit kreiszylindrischen Greifabschnitten 13, während die Greifabschnitte 13 der anderen Ausführungsbeispiele backenförmig mit ebenen oder konkav gewölbten Greifflächen gestaltet sind.

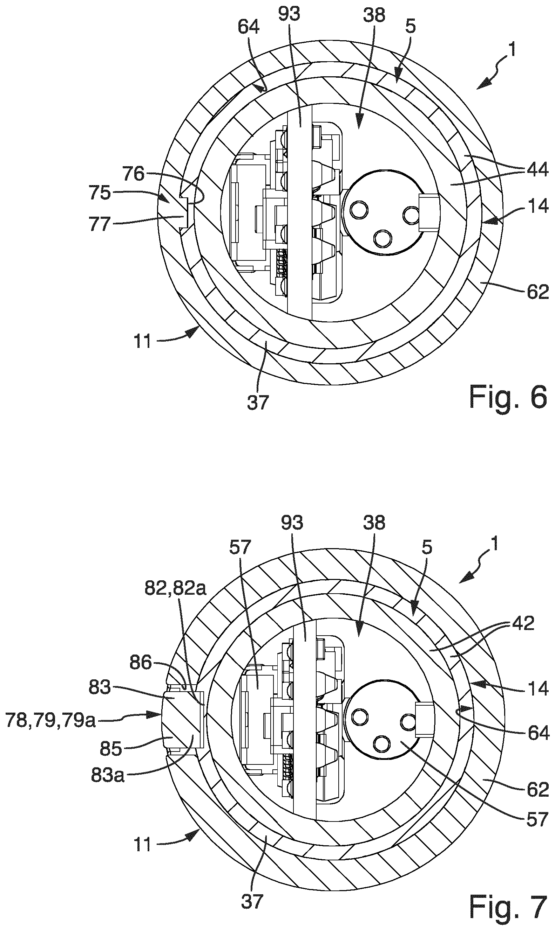

Sämtliche Greifarme 18 sind wie schon erwähnt in die bezüglich des Grundkörpers 5 separate Greifeinheit 11 integriert. Die Greifeinheit 11 hat eine Längsachse 11a und ist während des bestimmungsgemäßen Gebrauchs der Greifvorrichtung 1 unter Einnahme einer aus den Figuren 1, 2 und 4 bis 7 ersichtlichen Gebrauchsstellung lösbar an dem Grundkörper 5 befestigt.

Die Befestigung der Greifeinheit 11 an dem Grundkörper 5 geschieht unter Vermittlung einer Befestigungshülse 15 der Greifeinheit 11. Die Befestigungshülse 15 fungiert als Befestigungsschnittstelle zwischen den Greifarmen 18 und dem Grundkörper 5. Alle Greifarme 18 sind an der Befestigungshülse 15 befestigt, so dass sie zusammen mit der Befestigungshülse 15 eine einheitlich handhabbare Baueinheit bilden, nämlich die schon erwähnte Greifeinheit 11.

Bevorzugt ist jeder Greifarm 18 an seinem hinteren Endabschnitt 12 in schwenkbeweglicher Weise an der Befestigungshülse 15 fixiert. Der Bereich der schwenkbeweglichen Fixierung wird im Folgenden als Schwenkbereich 17 bezeichnet und definiert eine imaginäre Schwenkachse 17a, um die der zugeordnete Greifarm 18 unter Ausführung einer durch einen Doppelpfeil angedeuteten Greifarm-Schwenkbewegung 22 hin und her verschwenkbar ist. Sämtliche Schwenkachsen 17a liegen in einer gemeinsamen, zu der Zentrumsachse 4 rechtwinkeligen Schwenklagerebene.

Die Greifarm-Schwenkbewegung 22 kann alternativ eine nach innen in Richtung zur Zentrumsachse 4 orientierte Einwärts-Schwenkbewegung 22a sein oder eine diesbezüglich entgegengesetzte, sich von der Zentrumsachse 4 entfernende Auswärts-Schwenkbewegung 22b. Bei der Einwärts-Schwenkbewegung 22a nähern sich die Greifabschnitte 13 radial an die Zentrumsachse 4 an, während sie sich bei der Auswärts-Schwenkbewegung 22b von dieser Zentrumsachse 4 entfernen. Die Greifarm-Schwenkbewegung 22 findet bei allen Greifarmen 18 stets gleichzeitig und gleichsinnig statt.

In der Zeichnung sind alle Greifarme 18 bei Einnahme einer inneren Schwenkstellung gezeigt, die auch als Schließstellung bezeichnet wird und in der die Greifarme 18 mit ihren Greifabschnitten 13 weitestmöglich an die Zentrumsachse 4 angenähert sind. In der Figur 5 ist strichpunktiert jeweils auch eine äußere Schwenkstellung der Greifarme 18 illustriert, die auch als Offenstellung bezeichnet wird und in der die Greifarme 18 mit größtmöglichem Abstand zu der Zentrumsachse 4 angeordnet sind.

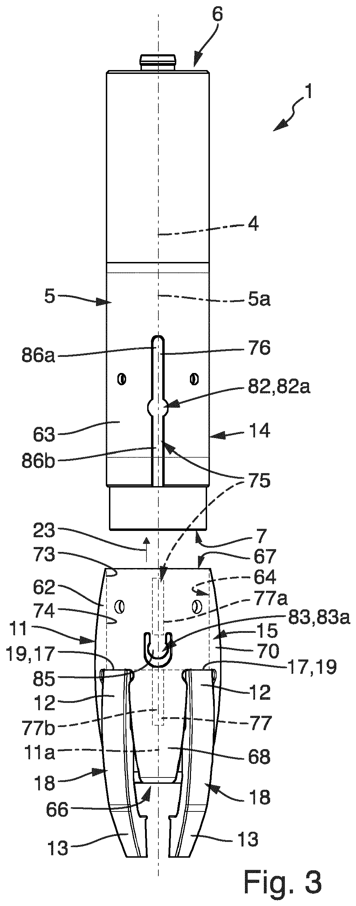

Die Greifeinheit 11 kann zur Montage der Greifvorrichtung 1 im Rahmen einer durch einen Pfeil angedeuteten Aufsteckbewegung 23 aus einer vom Grundkörper 5 eingenommenen, in den Figuren 3 und 4 ersichtlichen Bereitschaftsstellung in eine auf dem Grundkörper 5 sitzende, aus den Figuren 1, 2, 6 und 7 ersichtliche Gebrauchsstellung aufgesteckt werden. Das Aufstecken erfolgt mit koaxialer Ausrichtung zwischen der Greifeinheit 11 und dem Grundkörper 5 und geschieht von der Vorderseite 7 des Grundkörpers 5 her. Aufgesteckt wird die Greifeinheit 11 auf den Grundkörper 5 mit ihrer Befestigungshülse 15.

Konkret verfügt die Befestigungshülse 15 über einen hülsenförmigen Befestigungsabschnitt 62, mit dem sie koaxial auf einen sich an die Vorderseite 7 anschließenden vorderen Endabschnitt 63 des Grundkörpers 5 koaxial aufgesteckt ist. Der hülsenförmige Befestigungsabschnitt 62 hat eine radiale Innenumfangsfläche 64, die bevorzugt kreiszylindrisch ausgebildet ist und die komplementär zu der radialen Außenumfangsfläche 14 des Grundkörpers 5 im Bereich des vorderen Endabschnittes 63 ausgebildet ist. Sowohl die radiale Außenumfangsfläche 14 im Bereich des vorderen Endabschnittes 63 als auch die radiale Innenumfangsfläche 64 des hülsenförmigen Befestigungsabschnittes 62 haben bevorzugt eine kreisförmige Querschnittskontur, wobei diese Flächen so aufeinander abgestimmt sind, dass der hülsenförmige Befestigungsabschnitt 62 bei seiner Montage axial über den vorderen Endabschnitt 63 des Grundkörpers 5 hinweggleiten kann und dabei gleichzeitig radial abgestützt ist.

Bei dem bevorzugten illustrierten Ausführungsbeispiel nimmt der hülsenförmige Befestigungsabschnitt 62 die gesamte axiale Länge der Befestigungshülse 15 ein. Abgesehen von einem bevorzugt plattenförmigen geschlossenen Bodenabschnitt 65, der sich im Bereich einer axialen Vorderseite 66 der Befestigungshülse 15 befindet und der in der Gebrauchsstellung der Greifeinheit 11 dem Grundkörper 5 vorgelagert ist, erstreckt sich die gesamte Befestigungshülse 15 axial entlang der Außenumfangsfläche 14 des Grundkörpers 5. Der Bodenabschnitt 15 bewirkt eine Versteifung der Befestigungshülse 15.

Die Greifarme 18 sind mit ihrem hinteren Endabschnitt 12 schwenkbeweglich an dem hülsenförmigen Befestigungsabschnitt 62 fixiert. Die Fixierbereiche, die jeweils einen der Schwenkbereiche 17 definieren, sind zu der axialen Vorderseite 66 und auch zu der diesbezüglich entgegengesetzten axialen Rückseite 67 der Befestigungshülse 15 beabstandet. Auf diese Weise sind die Schwenkbereiche 17 in einem axialen Abstand zur Vorderseite 7 im Bereich des Außenumfanges des Grundkörpers 5 platziert. Sämtliche Greifarme 18 ragen mit ihren vorderen Endabschnitten 13 axial über die Vorderseite 66 der Befestigungshülse 15 hinaus, und somit auch über den den vorderen Abschluss der Befestigungshülse 15 definierenden Bodenabschnitt 65.

Die Greifarm-Schwenkbewegung 22 ist eine Relativbewegung der Greifarme 18 bezüglich der Befestigungshülse 15, die in der Gebrauchsstellung am Grundkörper 5 befestigt ist.

Die Befestigungshülse 15 hat einen vorderen Hülsenendabschnitt 68, der sich axial an einen hinteren Hülsenendabschnitt 70 der Befestigungshülse 15 anschließt. Dieser vordere Hülsenendabschnitt 68 gehört bei dem illustrierten Ausführungsbeispiel zu dem hülsenförmigen Befestigungsabschnitt 62. Auch der vordere Hülsenendabschnitt 68 sitzt also in der Gebrauchsstellung der Greifeinheit 11 auf der radialen Außenumfangsfläche 14 des Grundkörpers 5. Der Bodenabschnitt 65 ist stirnseitig vorne an dem vorderen Hülsenendabschnitt 68 angeordnet.

Die Schwenkbereiche 17 befinden sich exemplarisch an dem hinteren Hülsenendabschnitt 70, insbesondere im Übergangsbereich zu dem vorderen Hülsenendabschnitt 68.

Der vordere Hülsenendabschnitt 68 zeichnet sich dadurch aus, dass seine Wandung von mehreren um die Längsachse 11a und somit auch um die Zentrumsachse 4 herum verteilten Längsschlitzen 69 radial durchsetzt ist. Die Längsschlitze 69 erstrecken sich in der Achsrichtung der Längsachse 11a der Greifeinheit 11. Verteilung und Anzahl der Längsschlitze 69 entspricht der Verteilung und Anzahl der Greifarme 18. In jedem Längsschlitz 69 erstreckt sich einer der Greifarme 18, wobei die Breite jedes Längsschlitzes 69 so auf die Breite des zugeordneten Greifarmes abgestimmt ist, dass der Greifarm 18 bei der Greifarm-Schwenkbewegung im zugeordneten Längsschlitz 69 beweglich ist.

Zwischen den in der Umfangsrichtung der Längsachse 11a aufeinanderfolgend angeordneten Längsschlitzen 69 erstreckt sich jeweils axial ein Stegabschnitt 72 des vorderen Hülsenendabschnittes 68, der den hülsenförmigen Befestigungsabschnitt 62 mit dem Bodenabschnitt 65 verbindet. Dadurch hat der vordere Hülsenendabschnitt 68 eine käfigartige Struktur.

Gemäß einem nicht illustrierten Ausführungsbeispiel kann der vordere Hülsenendabschnitt 68 nicht oder nur teilweise zu dem hülsenförmigen Befestigungsabschnitt 62 gehören, so dass er in der montierten Gebrauchsstellung der Greifeinheit 11 ganz oder teilweise axial an der Vorderseite 7 über den Grundkörper 5 hinausragt.

Einschließlich des Bodenabschnittes 65 und abgesehen von den Längsschlitzen 69 ist die Befestigungshülse 15 vorzugsweise becherförmig gestaltet.

Jeder Schwenkbereich 17 kann prinzipiell als Scharnier mit mehreren relativ zueinander beweglichen separaten Bestandteilen ausgeführt sein. Beispielsweise kann jeder Greifarm 16 um einen an der Befestigungshülse 15 befestigten Lagerbolzen verschwenkbar gelagert sein. Bevorzugt wird allerdings die illustrierte Ausführungsform, bei der jeder Schwenkbereich 17 durch ein Festkörpergelenk 19 realisiert ist, das daraus resultiert, dass der hintere Endabschnitt des Greifarmes 18 einstückig und biegeflexibel mit dem hülsenförmigen Befestigungsabschnitt 62 verbunden ist. Der Schwenkbereich 17 ist vorzugsweise nach Art einer Blattfeder konzipiert. Er resultiert allein aus der lokalen Elastizität oder Flexibilität des Materials der Greifeinheit 11. Insbesondere in diesem Zusammenhang ist es vorteilhaft, wenn die gesamte Greifeinheit 11 aus einem Kunststoffmaterial besteht, was auf das Ausführungsbeispiel zutrifft. Bei dem Kunststoffmaterial handelt es sich vorzugsweise um einen Polyamidkunststoff. Eine Faserverstärkung ist möglich.

Die Befestigungshülse 15 der Greifeinheit 11 ist an ihrer axialen Rückseite 67 offen. Hier mündet der von der Befestigungshülse 15 umgebene Hülseninnenraum 74 mit einer Montageöffnung 73 axial aus. Beim Zusammenbau der Greifvorrichtung 1 wird die Greifeinheit 11 mit der Montageöffnung 73 voraus gemäß der Aufsteckbewegung 23 von der Vorderseite 7 her auf den Grundkörper 5 aufgesteckt.

Die Befestigungshülse 15 und der Grundkörper 5 sind bevorzugt so aufeinander abgestimmt, dass die Befestigungshülse 13 zur Einnahme der Gebrauchsstellung durch eine rein lineare Aufsteckbewegung 23 auf den Grundkörper 5 aufsteckbar ist.

Bevorzugt verfügt die Greifvorrichtung 1 über eine zwischen dem Grundkörper 5 und dem hülsenförmigen Befestigungsabschnitt 62 der Befestigungshülse 15 wirksame Linearführungseinrichtung 75, die dafür verantwortlich ist, dass die Aufsteckbewegung 23 eine reine Linearbewegung in der Achsrichtung der Zentrumsachse 4 ist. Die Linearführungseinrichtung 75 bewirkt außerdem eine Verdrehsicherung zwischen der Greifeinheit 11 und dem Grundkörper 5, indem sie ein Verdrehen der auf den Grundkörper 5 aufgesteckten Befestigungshülse 15 relativ zum Grundkörper 5 um die Zentrumsachse 4 verhindert.

Die Linearführungseinrichtung 75 enthält eine in der radialen Außenumfangsfläche 14 des Grundkörpers 5 ausgebildete Führungsnut 76, die sich in der Achsrichtung der Längsachse 5a erstreckt und die zu der Vorderseite 7 hin offen ist. Die Führungsnut 76 beschränkt sich längenmäßig zweckmäßigerweise auf den vorderen Endabschnitt 63 des Grundkörpers 5, auf dem die ihre Gebrauchsstellung einnehmende Greifeinheit 11 sitzt.

Die Befestigungshülse 15 verfügt im Bereich ihres hülsenförmigen Befestigungsabschnittes 62 an der radialen Innenumfangsfläche 64 über eine sich in der Achsrichtung der Längsachse 11a erstreckende Führungsrippe 77. Die Führungsrippe 77 ist breitenmäßig an die Breite der Führungsnut 76 angepasst, so dass sie in die Führungsnut 76 eingreifen und unter Querabstützung darin gleiten kann. Exemplarisch erstreckt sich die Führungsrippe 77 axial beidseits desjenigen Bereiches der Befestigungshülse 15, in dem sich die Schwenkbereiche 17 befinden.

Zum Aufstecken auf den Grundkörper 5 wird die Greifeinheit 11 nach vorheriger koaxialer Ausrichtung bezüglich des Grundkörpers 5 derart drehwinkelmäßig positioniert, dass die Führungsrippe 77 mit der Führungsnut 76 axial fluchtet. Bei der anschließenden Aufsteckbewegung 23 wird die Führungsrippe 77 mit ihrer der axialen Rückseite 67 zugewandten Stirnseite voraus axial in die Führungsnut 76 des Grundkörpers 5 eingeschoben. Gleichzeitig wird der hülsenförmige Befestigungsabschnitt 62 mit seiner Hülsenöffnung 74 auf den vorderen Endabschnitt 63 des Grundkörpers 5 aufgeschoben.

Die in der Gebrauchsstellung zwischen der Greifeinheit 11 und dem Grundkörper 5 eingenommene axiale Relativlage wird beispielsweise dadurch definiert, dass die Befestigungshülse 15 mit ihrem Bodenabschnitt 65 auf die an der Vorderseite 7 liegende Stirnfläche des Grundkörpers 5 aufläuft.

Eine Sicherungseinrichtung 78 der Greifvorrichtung 1 sorgt dafür, dass die Greifeinheit 11 in der aufgesteckten Gebrauchsstellung an dem Grundkörper 5 lösbar fixiert ist. Durch die Fixierung wird erreicht, dass die Greifeinheit 11 in der Achsrichtung der Zentrumsachse 4 derart bezüglich dem Grundkörper 5 formschlüssig blockiert ist, dass sie nicht unbeabsichtigt wieder von dem Grundkörper 5 heruntergezogen werden kann. Sie ist insbesondere axial unbeweglich an dem Grundkörper 5 gesichert. Andererseits ist die Sicherungseinrichtung 78 so ausgebildet, dass jederzeit ein derartiges Entsichern möglich ist, dass die Greifeinheit 11 in der Gegenrichtung der Aufsteckbewegung 23 in die Bereitschaftsstellung von dem Grundkörper 5 axial abgezogen werden kann.

Die miteinander kooperierenden Komponenten der Sicherungseinrichtung 78 sind zum einen an dem Grundkörper 5 und seitens der Befestigungshülse 15 bevorzugt an dem hülsenförmigen Befestigungsabschnitt 62 angeordnet.

Die Sicherungseinrichtung 78 ist bevorzugt als eine Verriegelungseinrichtung 79 konzipiert. Dies trifft auf das illustrierte Ausführungsbeispiel zu.

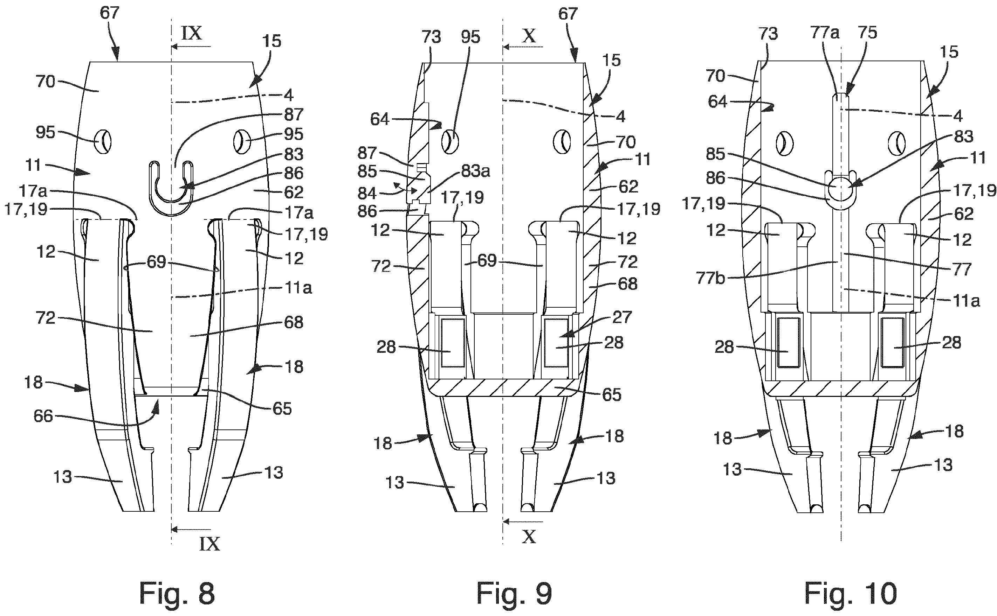

Die Verriegelungseinrichtung 79 hat eine unbeweglich an dem Grundkörper angeordnete erste Verriegelungsstruktur 82 und eine zu der ersten Verriegelungsstruktur 82 komplementäre, beweglich ausgebildete zweite Verriegelungsstruktur 83, die an dem hülsenförmigen Befestigungsabschnitt 62 angeordnet ist. Durch die Beweglichkeit der zweiten Verriegelungsstruktur 83, die in Figuren 2 und 9 bei 84 durch einen Doppelpfeil angedeutet ist, kann die zweite Verriegelungsstruktur 83 zwischen einer Verriegelungsstellung und einer Entriegelungsstellung bewegt werden.

Exemplarisch ist die erste Verriegelungsstruktur 82 als eine in die radiale Außenumfangsfläche 14 des Grundkörpers 5 eingebrachte Verriegelungsvertiefung 82a ausgebildet. Die zur Befestigungshülse 15 gehörende bewegliche zweite Verriegelungsstruktur 83 enthält ein gemäß Doppelpfeil 84 bewegliches Riegelelement 85 mit einem im Bereich der radialen Innenumfangsfläche 64 des hülsenförmigen Befestigungsabschnittes 62 radial nach innen ragenden Verriegelungsvorsprung 83a. Die Verriegelungsvertiefung 82a und der Verriegelungsvorsprung 83a sind vorzugsweise derart komplementär ausgebildet, dass sie formschlüssig ineinander eingreifen können und dadurch die Beweglichkeit der Greifeinheit 11 relativ zum Grundkörper 5 in der Achsrichtung der Zentrumsachse 4 blockieren.

Bei dem illustrierten Ausführungsbeispiel ist das Riegelelement 85 in einer Wandaussparung 86 des hülsenförmigen Befestigungsabschnittes 62 angeordnet und über einen federelastischen Verbindungsabschnitt 87 einstückig und schwenkbeweglich mit dem Befestigungsabschnitt 62 verbunden. Die daraus resultierende Beweglichkeit 84 des Riegelelements 85 ist eine Schwenkbeweglichkeit. Die Wandaussparung 86 durchsetzt die Wandung des hülsenförmigen Befestigungsabschnittes 62.

Die beiden Verriegelungsstrukturen 82, 83 sind so angeordnet, dass sie in der Gebrauchsstellung der Greifeinheit 11 ineinander eingreifen. Durch den Verbindungsabschnitt 87 wird das Riegelelement 85 in einer Grundstellung gehalten, die der schon angesprochenen Verriegelungsstellung entspricht, in der der Verriegelungsvorsprung 83a formschlüssig mit Verriegelungswirkung in die Verriegelungsvertiefung 82a eintaucht.

Durch manuelle Krafteinleitung, bei Bedarf unter Verwendung eines geeigneten Hebelwerkzeuges wie beispielsweise eines Schraubendrehers, kann das Riegelelement 85 unter Ausführung der Schwenkbewegung 84 bei Bedarf vom Grundkörper 5 weg in eine Entriegelungsstellung verschwenkt werden, in der der Verriegelungsvorsprung 83a außer Eingriff mit der Verriegelungsvertiefung 82a steht. In diesem Zustand ist die Verriegelungswirkung aufgehoben und die Greifeinheit 11 kann ungehindert axial vom Grundkörper 5 abgezogen werden.

Bevorzugt ist das Riegelelement 85 über den Verbindungsabschnitt 87 federelastisch aufgehängt, so dass für die entriegelnde Bewegung 84 eine federelastische Rückstellkraft überwunden werden muss. Wird das entriegelte Riegelelement 85 anschließend losgelassen, kehrt es aufgrund der federelastischen Aufhängung selbsttätig in die Verriegelungsstellung zurück. Insofern ist die Verriegelungseinrichtung 79 bei dem illustrierten Ausführungsbeispiel zugleich als eine Schnappverbindungseinrichtung 79a ausgebildet, die den Effekt hat, dass die beiden Verriegelungsstrukturen 82, 83 beim Aufstecken der Greifeinheit 11 auf den Grundkörper 5 selbsttätig miteinander verrasten, wenn die aufgesteckte Gebrauchsstellung erreicht ist. Während des Aufschiebens wird das Riegelelement 85 durch Kontakt mit der radialen Außenumfangsfläche 14 in die Entriegelungsstellung bewegt, in der es verbleibt, bis es bei der Aufsteckbewegung 23 in den Bereich der Verriegelungsvertiefung 82a gelangt. Bei der Aufsteckbewegung 23 gleitet das Riegelelement 85 auf der radialen Außenumfangsfläche 14 ab.

Bevorzugt ist die erste Verriegelungsstruktur 82 so an dem Grundkörper 5 platziert, dass sie im Längsverlauf der Führungsnut 76 der Linearführungseinrichtung 75 liegt. Exemplarisch wird die Führungsnut 76 von der als Verriegelungsvertiefung 82a ausgebildeten ersten Verriegelungsstruktur 82 axial in zwei Nutlängenabschnitte 86a, 86b unterteilt, die gemäß Figur 3 von entgegengesetzten Axialseiten her in die Verriegelungsvertiefung 82a einmünden.

Ebenfalls exemplarisch ist das Riegelelement 85 in den Längsverlauf der Führungsrippe 77 eingegliedert, so dass sie die Führungsrippe 77 in zwei axial zueinander beabstandete Rippenlängenabschnitte 77a, 77b unterteilt.

Die lösbare Fixierung der Greifeinheit 11 an dem Grundkörper 5 erlaubt es, sämtliche Greifarme 18 mit einer einfachen, einheitlichen Handhabungsmaßnahme gegen andere Greifarme auszutauschen. Die Austauschmaßnahme umfasst jeweils die komplette Greifeinheit 11. Bevorzugt werden mehrere Greifeinheiten 11 in einer demontierten Bereitschaftsstellung bereitgehalten, die in der Ausgestaltung ihrer Befestigungshülse 15 übereinstimmen, sich jedoch in der Ausgestaltung der Greifarme 18 voneinander unterscheiden. Je nach Anwendungszweck kann dann wahlweise eine der mehreren bereitgehaltenen Greifeinheiten 11 am Grundkörper 5 montiert werden. Die leichte Lösbarkeit der Greifeinheit 11 erlaubt auch einen raschen Austausch der gesamten Greifeinheit 11 in einem Schadensfall.

Zum Hervorrufen der Greifarm-Schwenkbewegung 22 ist die Greifvorrichtung mit einer geeigneten Betätigungseinrichtung 26 ausgestattet.

Die Betätigungseinrichtung 76 kann prinzipiell auf einem mechanischen Funktionsprinzip basieren und dafür ausgebildet sein, durch mechanischen Kontakt Betätigungskräfte in die Greifarme 18 einzuleiten, um die Greifarm-Schwenkbewegung 22 hervorzurufen.

Bevorzugt und entsprechend des illustrierten Ausführungsbeispiels ist die Betätigungseinrichtung 26 als eine permanentmagnetische Bestätigungseinrichtung 26a ausgebildet. Hier werden die die Greifarm-Schwenkbewegungen 22 hervorrufenden Kräfte durch Magnetkraft berührungslos und somit ohne Verschleiß in die Greifarme 18 eingeleitet.

Die permanentmagnetische Betätigungseinrichtung 26a hat bevorzugt eine an den Greifarmen 18 angeordnete äußere Permanentmagnetanordnung 27 und eine mit dieser äußeren Permanentmagnetanordnung 27 magnetisch in Wechselwirkung stehende, dem Grundkörper 5 zugeordnete innere Permanentmagnetanordnung 34.

Die äußere Permanentmagnetanordnung 27 setzt sich aus mehreren individuellen äußeren Permanentmagneteinheiten 28 zusammen, deren Anzahl derjenigen der Greifarme 18 entspricht, wobei an jedem Greifarm 18 eine eigene äußere Permanentmagneteinheit 28 fest angeordnet ist.

Bezogen auf die Achsrichtung der Zentrumsachse 4 sind die äußeren Permanentmagneteinheiten 28 sämtlicher Greifarme 18 vorzugsweise auf gleicher axialer Höhe angeordnet. Sie liegen gemeinsam in einer zu der Zentrumsachse 4 rechtwinkeligen Antriebsebene.

Die innere Permanentmagnetanordnung 34 ist Bestandteil einer von dem Grundkörper 5 getragenen Betätigungseinheit 35, die unter Ausführung einer durch einen Doppelpfeil kenntlich gemachten rotativen Arbeitsbewegung 36 relativ zu dem Grundkörper 5 und auch relativ zu den Greifarmen 18 verdrehbar ist, und zwar um eine Drehachse 39, die mit der Zentrumsachse 4 zusammenfällt. Die Betätigungseinheit 35 ist auf der Höhe der vorstehend erwähnten Antriebsebene in einer Gehäusekammer 38 eines Gehäuses 37 aufgenommen, wobei das Gehäuse 37 ein Bestandteil des Grundkörpers 5 ist oder entsprechend des illustrierten Ausführungsbeispiels den Grundkörper 5 bildet. Das Gehäuse 37 hat exemplarisch eine sich rings um die Zentrumsachse 4 herum erstreckende Gehäuse-Seitenwand 42, die beispielsweise hohlzylindrisch gestaltet ist und deren radiale Außenfläche die Außenumfangsfläche 14 bildet, auf der die in der Gebrauchsstellung positionierte Greifeinheit 11 sitzt.

Die innere Permanentmagnetanordnung 34 hat eine Mehrzahl von inneren Permanentmagneteinheiten 47, die mit radialem Abstand zu der Drehachse 39 angeordnet sind und die außerdem um diese Drehachse 39 herum unter gegenseitigem Winkelabstand verteilt sind. Bevorzugt liegen sämtliche inneren Permanentmagneteinheiten 47 auf einem Kreis, dessen Zentrum auf der Drehachse 39 liegt. Sämtliche inneren Permanentmagneteinheiten 47 liegen zweckmäßigerweise in ein und derselben Antriebsebene mit den äußeren Permanentmagneteinheiten 28.

Durch die rotative Arbeitsbewegung 36 kann die Betätigungseinheit 35 einschließlich der inneren Permanentmagneteinheiten 47 in unterschiedlichen rotativen Arbeitsstellungen positioniert werden. Anders ausgedrückt, kann die Betätigungseinheit 35 durch die rotative Arbeitsbewegung 36 in unterschiedliche Drehwinkelstellungen verbracht werden. Bei dieser Arbeitsbewegung 36 verändert sich die bezüglich der äußeren Permanentmagneteinheiten 28 eingenommene Relativposition der inneren Permanentmagneteinheiten 47, wodurch die zwischen den inneren Permanentmagneteinheiten 47 und den äußeren Permanentmagneteinheiten 28 wirkenden Magnetkräfte veränderbar sind. Dabei werden die äußeren Permanentmagneteinheiten 28 und folglich die mit diesen äußeren Permanentmagneten 28 bestückten Greifarme 18 von den inneren Permanentmagneteinheiten 47 entweder angezogen oder abgestoßen. Aus der anziehenden Magnetwirkung resultiert die Einwärts-Schwenkbewegung 22a und aus der abstoßenden Magnetwirkung resultiert die Auswärts-Schwenkbewegung 22b.

Die Betätigungseinheit 35 weist bevorzugt einen die inneren Permanentmagneteinheiten 37 tragenden scheibenförmigen Tragkörper 44 auf, über den die Betätigungseinheit 35 bezüglich des Grundkörpers 5 drehbar gelagert ist. Die inneren Permanentmagneteinheiten 47 sind mit radialem Abstand zu der Drehachse 39 an dem Tragkörper 44 fixiert. Hierzu sind die inneren Permanentmagneteinheiten 47 beispielsweise in Aufnahmetaschen 46 am radialen Außenumfang des Tragkörpers 44 aufgenommen und gehalten. Bei dem illustrierten Ausführungsbeispiel sind die äußeren Permanentmagneteinheiten 28 in der Drehrichtung 36 der Betätigungseinheit 35, also um die Drehachse 39 herum, abwechselnd mit einander entgegengesetzten Polarisierungsrichtungen angeordnet. Die Polarisierungsrichtungen sind jeweils radial bezüglich der Drehachse 39 ausgerichtet. Es wechseln sich somit an den der Drehachse 39 radial zugewandten Innenseiten der äußeren Permanentmagneteinheiten 28 Nordpole "N" und Südpole "S" in der Drehrichtung 36 der Betätigungseinheit 35 ab. Dies ist in Figur 5 gut zu erkennen.

Die inneren Permanentmagneteinheiten 47, deren Anzahl bevorzugt der Anzahl der äußeren Permanentmagneteinheiten 28 entspricht, sind ebenfalls in der Drehrichtung 36 abwechselnd mit einander entgegengesetzten Polarisierungsrichtungen angeordnet, wobei auch die inneren Permanentmagneteinheiten 47 radial polarisiert sind. In Figur 5 sind die Nordpole mit "N" und die Südpole mit "S" bezeichnet.

Durch die geschilderte Anordnung besteht die Möglichkeit, die Betätigungseinheit 35 durch die rotative Arbeitsbewegung 36 in wenigstens zwei rotativen Arbeitsstellungen zu positionieren, in denen sich entweder gleichnamige Pole oder ungleichnamige Pole der inneren und äußeren Permanentmagneteinheiten 47, 28 radial gegenüberliegen. In Figur 5 gezeigt ist eine Arbeitsstellung, in der sich ungleichnamige Magnetpole gegenüberliegen, so dass die Greifarme 18 zur Einnahme der Schließstellung angezogen sind. Wenn sich gleichnamige Pole gegenüberliegen, was exemplarisch nach einem Verdrehen der Betätigungseinheit 35 um 90 Grad der Fall ist, stoßen sich die sich gegenüberliegenden inneren und äußeren Permanentmagneteinheiten 47, 28 ab, so dass die Greifarme 18 in die in Figur 5 strichpunktiert angedeutete Offenstellung nach außen bewegt werden.

Es versteht sich, dass zur Realisierung der magnetischen Wechselwirkung auch andere Verteilungen und Polarisierungsrichtungen der inneren und/oder äußeren Permanentmagneteinheiten 47, 28 vorgesehen sein können.

Bei einem nicht illustrierten alternativen Ausführungsbeispiel ist die Arbeitsbewegung der Betätigungseinheit eine Linearbewegung in der Achsrichtung der Zentrumsachse 4. Hier wird dann die Betätigungseinheit vergleichbar dem Kolben eines fluidbetätigten Arbeitszylinders linear verschoben, um die Greifarme 18 zu betätigen. Die Betätigung kann durch Fluidkraft oder elektrisch erfolgen.

Damit die inneren und äußeren Permanentmagneteinheiten 47, 28 problemlos magnetisch zusammenwirken können, ist es zweckmäßig, wenn die Gehäuse-Seitenwand 42 des Gehäuses 37 zumindest im Bereich der inneren und äußeren Permanentmagneteinheiten 47, 28 aus einem nicht magnetisierbaren Material besteht.

Zur Erzeugung der Arbeitsbewegung 36 der Betätigungseinheit 35 ist die Greifvorrichtung 1 zweckmäßigerweise mit einer Antriebseinheit 52 ausgestattet. Diese Antriebseinheit 52 kann beispielsweise von einer durch Fluidkraft betätigbaren Bauart sein, ist jedoch vorzugsweise und entsprechend des Ausführungsbeispiels von einer elektrisch betätigbaren Bauart.

Die Antriebseinheit 52 ist zweckmäßigerweise in der Gehäusekammer 38 des Gehäuses 37 aufgenommen. Sie ist dort insbesondere in koaxialer Verlängerung der Betätigungseinheit 35 angeordnet, insbesondere auf der der Rückseite 6 zugewandten Seite der Betätigungseinheit 35.

Die Antriebseinheit 52 hat ein Antriebsgehäuse 53, über das sie an dem Gehäuse 37 des Grundkörpers 5 befestigt ist. Eine aus dem Antriebsgehäuse 53 herausragende Abtriebswelle 54 ist zur Erzeugung der rotativen Arbeitsbewegung 36 antriebsmäßig mit dem Tragkörper 44 der Betätigungseinheit 35 verbunden.

Bei dem illustrierten Ausführungsbeispiel ist die Antriebseinheit 52 als Elektromotor ausgeführt. Bevorzugt handelt es sich bei der Antriebseinheit 52 um einen elektrischen Servomotor, mit dem sich die Betätigungseinheit 35 stufenlos verdrehen und nach Bedarf drehwinkelmäßig positionieren lässt. Dafür erforderliche elektrische Steuerbefehle liefert beispielsweise eine elektronische Steuereinrichtung 56, die vorzugsweise ebenfalls ein Bestandteil der Greifvorrichtung 1 ist und die mit der Antriebseinheit 52 elektrisch verbunden ist. Für die elektrische Verbindung ist der Grundkörper 5 zweckmäßigerweise mit einer oder mehreren elektromechanischen Schnittstellen 57 ausgestattet.

Bevorzugt ermöglicht die Antriebseinheit 52 die Erzeugung einer bidirektionalen rotativen Arbeitsbewegung 36 der Betätigungseinheit 35. Dies ermöglicht ein Öffnen und Schließen der Greifarme 18 durch wahlweises Verdrehen im Uhrzeigersinn oder entgegen des Uhrzeigersinns der Betätigungseinheit 35.

Zweckmäßigerweise ist die Greifvorrichtung 1 mit einer zur Erfassung mindestens eines Betriebszustandes der Greifvorrichtung 1 ausgebildeten Sensoreinrichtung 88 ausgestattet. Die Sensoreinrichtung 88 ist insbesondere in der Lage, mindestens eine und insbesondere jede der durch die Greifarm-Schwenkbewegungen 22 einstellbaren Schwenkpositionen der Greifarme 18 zu detektieren.

Exemplarisch umfasst die Sensoreinrichtung 88 mehrere Hall-Sensoren, die im Innern des Gehäuses 37 so untergebracht sind, dass sie im Einflussbereich sowohl der inneren Permanentmagnetanordnung 34 als auch der äußeren Permanentmagnetanordnung 37 liegen. Die Sensoreinrichtung 88 ist dadurch in der Lage, sowohl die Schwenkpositionen der Greifarme 18 als auch die Drehposition der Betätigungseinheit 35 zu detektieren und an die Steuereinrichtung 56 zu übermitteln. Diese Stellungsinformationen können verwendet werden, um die Greifarme 18 zur Ausführung der Greifarm-Schwenkbewegung 22 anzusteuern. Es besteht insbesondere die Möglichkeit, den momentanen Öffnungsgrad der Greifarme 18 zu erfassen. Auch kann durch die Positionserfassung der inneren Permanentmagnetanordnung 34 der Drehwinkel der Betätigungseinheit 35 ermittelt und gesteuert werden.

Zweckmäßigerweise ist die Greifvorrichtung 1 mit einer Leuchtanzeigeeinrichtung 92 ausgestattet, durch die mindestens ein Betriebszustand der Greifvorrichtung 1 visualisierbar ist. Insbesondere besteht die Möglichkeit, durch die Leuchtanzeigeeinrichtung 92 Greifarmstellungen der Greifarme 18 durch optische Signale anzuzeigen. Beispielsweise können die Offenstellung und die Schließstellung durch unterschiedliche Lichtfarben visualisiert werden. Angesteuert wird die Leuchtanzeigeeinrichtung 92 insbesondere auf der Grundlage der von der Sensoreinrichtung 88 gelieferten Sensorsignale, wobei sowohl eine direkte Ansteuerung möglich ist als auch eine indirekte Ansteuerung unter Zwischenschaltung der elektronischen Steuereinrichtung 56.

Die Leuchtanzeigeeinrichtung 92 ist zweckmäßigerweise vor äußeren Umgebungen abgeschirmt im Innern der Gehäusekammer 38 des Gehäuses 37 untergebracht. Dort befinden sich zweckmäßigerweise auch die Sensoreinrichtung 88, die Antriebseinheit 52 und die Betätigungseinheit 35. Auch eine Leiterplatte 93 mit elektronischen Bauteilen, an die die elektromechanische Schnittstelle 57 angeschlossen ist, kann sich in der Gehäusekammer 38 befinden. Bevorzugt sind die Antriebseinheit 52, die Sensoreinrichtung 88 und die Leuchtanzeigeeinrichtung 92 über elektrische Leiter an die Leiterplatte 93 angeschlossen, von der aus eine elektrische Verbindung mit der elektronischen Steuereinrichtung 56 erfolgt.

Die Gehäusekammer 38 und die darin befindlichen Komponenten sind zweckmäßigerweise durch das Gehäuse 37 von der Umgebung hermetisch dicht abgekapselt.

In der Gehäuse-Seitenwand 42 sind im Bereich der Leuchtanzeigeeinrichtung 92 mehrere um die Zentrumsachse 4 herum verteilt angeordnete Wanddurchbrechungen 94 ausgebildet. Durch diese Wanddurchbrechungen 94 hindurch, die zweckmäßigerweise lichtdurchlässig verschlossen sind, können die von der Leuchtanzeigeeinrichtung 92 ausgesandten Lichtsignale zu einem Beobachter hin nach außen dringen. Bevorzugt enthält die Leuchtanzeigeeinrichtung 92 mehrere in der Gehäusekammer 38 jeweils im Bereich einer der Wanddurchbrechungen 94 platzierte LEDs zur Lichterzeugung. Exemplarisch sind vier Wanddurchbrechungen 94 mit jeweils einer zugeordneten LED der Leuchtanzeigeeinrichtung 92 vorhanden.

Die Wanddurchbrechungen 94 befinden sich bevorzugt in demjenigen Längenabschnitt der Gehäuse-Seitenwand 42, der von der Befestigungshülse 15 der die Gebrauchsstellung einnehmenden Greifeinheit 11 überdeckt ist. Beispielhaft sind die Wanddurchbrechungen 94 in dem sich rückseitig an den vorderen Hülsenendabschnitt 68 anschließenden hinteren Hülsenendabschnitt 70 ausgebildet.

Trotz montierter Greifeinheit 11 sind die Lichtsignale der Leuchtanzeigeeinrichtung 92 von außen gut erkennbar, weil der hülsenförmige Befestigungsabschnitt 62 im Bereich einer jeden Wanddurchbrechung 94 der Gehäuse-Seitenwand 42 von einem Sichtfenster 95 durchsetzt ist, durch das die Lichtsignale nach außen hindurchtreten können. Die Sichtfenster 95 sind von Durchbrechungen der Wandung der Befestigungshülse 15 gebildet und können offen oder transparent verschlossen sein. Die umfangsmäßige Verteilung bezüglich der Befestigungshülse 15 entspricht derjenigen der Wanddurchbrechungen 94, so dass mit jeder Wanddurchbrechung 94 eines der Sichtfenster 95 fluchtet. Exemplarisch befinden sich die Sichtfenster 95 in dem hinteren Hülsenendabschnitt 70. In diesem hinteren Hülsenendabschnitt 70 ist vorzugsweise auch die zweite Verriegelungsstruktur 83 ausgebildet.

Die Anzahl der Wanddurchbrechungen 94 und Sichtfenster 95 kann von der beispielhaften abweichen. Beispielsweise können auch nur eine einzige Wanddurchbrechung 94 und/oder nur ein einziges Sichtfenster 95 vorhanden sein.

Die Greifeinheit 11 lässt sich kostengünstig herstellen. Beispielsweise ist eine Spritzgießfertigung möglich. Dies wird dadurch begünstigt, dass an der radialen Innenumfangsfläche 64 des hülsenförmigen Befestigungsabschnittes 62 und insbesondere der gesamten Befestigungshülse 15 kein Gewinde ausgebildet ist. Die radiale Innenumfangsfläche 64 ist bevorzugt glattflächig ausgeführt. Gleiches gilt für den von der Befestigungshülse 15 in der Gebrauchsstellung überdeckten Abschnitt der radialen Außenumfangsfläche 14 des Grundkörpers 5.

## Patentansprüche

1. Greifvorrichtung, mit einem Grundkörper (5) und mehreren an dem Grundkörper (5) um eine Zentrumsachse (4) herum verteilt angeordneten Greifarmen (18), wobei jeder Greifarm (18) unter Ausführung einer Greifarm-Schwenkbewegung (22) relativ zu dem Grundkörper (5) um einen Schwenkbereich (17) verschwenkbar ist und sämtliche Greifarme (18) durch eine Betätigungseinrichtung (26) der Greifvorrichtung (1) synchron wahlweise zu einer nach innen in Richtung zu der Zentrumsachse (4) orientierten Einwärts-Schwenkbewegung (22a) oder zu einer nach außen von der Zentrumsachse (4) weg orientierten Auswärts-Schwenkbewegung (22b) antreibbar sind, wobei die Greifarme (18) in eine bezüglich dem Grundkörper (5) separate Greifeinheit (11) integriert sind, die eine sämtliche Greifarme (18) tragende Befestigungshülse (15) aufweist und die mit einem hülsenförmigen Befestigungsabschnitt (62) der Befestigungshülse (15) in der Achsrichtung der Zentrumsachse (4) auf den Grundkörper (5) aufgesteckt und in einer dadurch eingenommenen Gebrauchsstellung durch eine Sicherungseinrichtung (78) an dem Grundkörper (5) lösbar fixiert ist, wobei die Sicherungseinrichtung (78) von mindestens einer Verriegelungseinrichtung (79) gebildet ist, die eine am Grundkörper (5) angeordnete erste Verriegelungsstruktur (82) und eine an dem hülsenförmigen Befestigungsabschnitt (62) der Befestigungshülse (15) angeordnete, zu der ersten Verriegelungsstruktur (82) komplementäre zweite Verriegelungsstruktur (83) aufweist, wobei eine der beiden Verriegelungsstrukturen (82, 83) unbeweglich und die andere Verriegelungsstruktur (83, 82) zum Ausführen eines Verriegelungsvorganges und eines Entriegelungsvorganges beweglich ist, **dadurch gekennzeichnet, dass** die Verriegelungseinrichtung (79) als Schnappverbindungseinrichtung (79a) ausgebildet ist, wobei die bewegliche erste oder zweite Verriegelungsstruktur (82, 83) zum Entriegeln federelastisch auslenkbar ist.

2. Greifvorrichtung nach Anspruch 1, **dadurch gekennzeichnet, dass** die Befestigungshülse (15) zur Einnahme der Gebrauchsstellung durch eine rein lineare Aufsteckbewegung (23) auf den Grundkörper (5) aufsteckbar oder aufgesteckt ist.

3. Greifvorrichtung nach Anspruch 1 oder 2, **dadurch gekennzeichnet, dass** die Sicherungseinrichtung (78) zwischen dem Grundkörper (5) und dem hülsenförmigen Befestigungsabschnitt (62) der Befestigungshülse (15) wirksam ist.

4. Greifvorrichtung nach einem der Ansprüche 1 bis 3, **dadurch gekennzeichnet, dass** die erste Verriegelungsstruktur (82) unbeweglich an dem Grundkörper (5) und die zweite Verriegelungsstruktur (83) beweglich an dem hülsenförmigen Befestigungsabschnitt (62) der Befestigungshülse (15) angeordnet ist.

5. Greifvorrichtung nach einem der Ansprüche 1 bis 4, **dadurch gekennzeichnet, dass** sie mindestens eine zwischen dem Grundkörper (5) und dem hülsenförmigen Befestigungsabschnitt (62) der Befestigungshülse (15) wirksame Linearführungseinrichtung (75) aufweist, durch die die Befestigungshülse (15) beim axialen Aufstecken auf den Grundkörper (5) und beim axialen Abziehen von dem Grundkörper (5) linear verschiebbar geführt ist und durch die die Befestigungshülse (15) in der auf den Grundkörper (5) aufgesteckten Gebrauchsstellung der Greifeinheit (11) bezüglich dem Grundkörper (5) unverdrehbar abgestützt ist, wobei die Linearführungseinrichtung (75) zweckmäßigerweise eine in einer bezüglich der Zentrumsachse (4) nach radial außen weisenden Außenumfangsfläche (14) des Grundkörpers (5) ausgebildete, sich in der Achsrichtung der Zentrumsachse (4) erstreckende Führungsnut (76) und eine gleitverschieblich in die Führungsnut (76) eingreifende, an einer radialen Innenumfangsfläche (64) des hülsenförmigen Befestigungsabschnittes (62) der Befestigungshülse (62) ausgebildete Führungsrippe (77) aufweist, oder umgekehrt.

6. Greifvorrichtung nach Anspruch 5, **dadurch gekennzeichnet, dass** die erste Verriegelungsstruktur (82) im Längsverlauf der Führungsnut (76) der Linearführungseinrichtung (75) und die zweite Verriegelungsstruktur (83) im Längsverlauf der Führungsrippe (77) der Linearführungseinrichtung (75) angeordnet ist.

7. Greifvorrichtung nach einem der Ansprüche 1 bis 6, **dadurch gekennzeichnet, dass** die Innenumfangsfläche (64) des hülsenförmigen Befestigungsabschnittes (62) der Befestigungshülse (15) und der in der Gebrauchsstellung der Greifeinheit (11) von dem hülsenförmigen Befestigungsabschnitt (62) der Befestigungshülse (15) umschlossene Abschnitt der Außenumfangsfläche (14) des Grundkörpers (5) kreiszylindrisch und komplementär zueinander ausgebildet sind.

8. Greifvorrichtung nach einem der Ansprüche 1 bis 7, **dadurch gekennzeichnet, dass** der hülsenförmige Befestigungsabschnitt (62) der Befestigungshülse (15) von mindestens einem Sichtfenster (95) durchsetzt ist, durch das hindurch von außen her eine in dem Grundkörper (5) untergebrachte, mindestens einen Betriebszustand der Greifvorrichtung (1) visualisierende und elektrisch betätigbare Leuchtanzeigeeinrichtung (92) sichtbar ist.

9. Greifvorrichtung nach einem der Ansprüche 1 bis 8, **dadurch gekennzeichnet, dass** die Befestigungshülse (15) an einer axialen Vorderseite (66) einen geschlossenen Bodenabschnitt (65) aufweist, der dem Grundkörper (5) in der Gebrauchsstellung der Greifeinheit (11) an einer Vorderseite (7) axial vorgelagert ist.

10. Greifvorrichtung nach einem der Ansprüche 1 bis 9, **dadurch gekennzeichnet, dass** die Greifarme (18) jeweils einen hinteren Endabschnitt (12) aufweisen, an dem sie unter Definition ihres jeweiligen Schwenkbereiches (17) schwenkbeweglich an dem hülsenförmigen Befestigungsabschnitt (62) der Befestigungshülse (15) fixiert sind, wobei jeder Greifarm (18) mit einem einen Greifabschnitt (13) bildenden, axial entgegengesetzten vorderen Endabschnitt über die Befestigungshülse (15) hinausragt.

11. Greifvorrichtung nach einem der Ansprüche 1 bis 10, **dadurch gekennzeichnet, dass** jeder Greifarm an seinem hinteren Endabschnitt (12) unter Bildung eines Festkörpergelenkes (19) einstückig und biegeflexibel mit dem hülsenförmigen Befestigungsabschnitt (62) der Befestigungshülse (15) verbunden ist, wobei zweckmäßigerweise die gesamte Greifeinheit (11) aus einem Kunststoffmaterial besteht.

12. Greifvorrichtung nach einem der Ansprüche 1 bis 11, **dadurch gekennzeichnet, dass** die Befestigungshülse (15) einen hülsenförmig ausgebildeten vorderen Hülsenendabschnitt (68) aufweist, dessen Wandung von mehreren um die Zentrumsachse herum verteilten Längsschlitzen (69) durchsetzt ist, in denen sich jeweils einer der Greifarme (18) erstreckt.

13. Greifvorrichtung nach einem der Ansprüche 1 bis 12, **dadurch gekennzeichnet, dass** die Betätigungseinrichtung (26) als eine permanentmagnetische Betätigungseinrichtung (26a) ausgebildet ist, die eine äußere Permanentmagnetanordnung (27) mit an den Greifarmen (18) angeordneten äußeren Permanentmagneteinheiten (28) und eine damit zusammenwirkende, von den Greifarmen (18) umgebene innere Permanentmagnetanordnung (34) umfasst, wobei die innere Permanentmagnetanordnung (34) Bestandteil einer beweglichen Betätigungseinheit (35) der permanentmagnetischen Betätigungseinrichtung (26a) ist, die durch Ausführung einer Arbeitsbewegung (36) relativ zu sowohl dem Grundkörper (5) als auch zu den Greifarmen (18) in unterschiedlichen Arbeitsstellungen positionierbar ist, so dass die äußeren Permanentmagneteinheiten zum Hervorrufen der Greifarm-Schwenkbewegungen (22) durch Magnetkräfte angezogen oder abgestoßen werden.

14. Greifvorrichtung nach Anspruche 13, **dadurch gekennzeichnet, dass** der Grundkörper (5) ein Gehäuse (37) aufweist, das eine Gehäusekammer (38) definiert, in der die Betätigungseinheit (35) und zweckmäßigerweise auch eine antriebsmäßig mit der Betätigungseinheit (35) verbundene Antriebseinheit aufgenommen ist, wobei die Gehäusekammer (38) zweckmäßigerweise peripher von einer zumindest im Bereich der Betätigungseinheit (35) nicht magnetisierbaren Gehäuse-Seitenwand (42) begrenzt ist, um die herum die Betätigungshülse (15) mit den daran angeordneten Greifarmen (18) platziert ist.

15. Greifvorrichtung nach einem der Ansprüche 1 bis 14, **dadurch gekennzeichnet, dass** sie mit einer zur Erfassung mindestens eines Betriebszustandes der Greifvorrichtung (1) ausgebildeten Sensoreinrichtung (88) ausgestattet ist, wobei die Sensoreinrichtung (88) zweckmäßigerweise in der Lage ist, mindestens eine und insbesondere jede durch die Greifarm-Schwenkbewegungen (22) einstellbare Schwenkposition jedes Greifarmes (18) zu detektieren.

## Claims

1. Gripping apparatus, comprising a base body (5) and several gripping arms (18) which are arranged on the base body (5) in a manner distributed about a center axis (4), wherein each gripping arm (18) is pivotable relative to the base body (5) about a pivoting region (17) whilst carrying out a gripping arm pivoting movement (22) and wherein all gripping arms (18), by way of an actuation device (26) of the gripping apparatus (1), can be driven synchronously in a selective manner into an inwards pivoting movement (22a) which is orientated inwards in the direction of the center axis (4) or into an outwards pivoting movement (22b) which is oriented outwards away from the center axis (4), wherein the gripping arms (18) are integrated into a gripping unit (11), said gripping unit being separate with respect to the base body (5), comprising a fastening sleeve (15) which carries all gripping arms (18), being stuck with a sleeve-like fastening section (62) of the fastening sleeve (15) onto the base body (5) in the axis direction of the center axis (4) and in a position of use which is assumed by way of this being releasably fixed on the base body (5) by way of a securing device (78), wherein the securing device (78) is formed by way of at least one locking device (79) which has a first locking structure (82) which is arranged on the base body (5) and a second locking structure (83) which is arranged on the sleeve-like fastening section (62) of the fastening sleeve (15) and is complementary to the first locking structure (82), wherein one the two locking structures (82, 83) is immovable and the other locking structure (83, 82) is movable for carrying out a locking procedure and an unlocking procedure. **characterised in that** the locking device (79) is designed as a snap-connection device (79a), wherein the movable first or second locking structure (82, 83) can be deflected in a spring-elastic manner for unlocking.

2. Gripping apparatus according to claim 1, **characterised in that** the fastening sleeve (15) for assuming the position of use can be stuck or is stuck onto the base body (5) by way of a purely linear stick-on movement (23).

3. Gripping apparatus according to claim 1 or 2, **characterised in that** the securing device (78) is designed such that it is effective between the base body (5) and the sleeve-like fastening section (62) of the fastening sleeve (15).

4. Gripping apparatus according to one of the claims claim 1 to 3, **characterised in that** the first locking structure (82) is arranged on the base body (5) in an immovable manner and the second locking structure (83) is movably arranged on the sleeve-like fastening section (62) of the fastening sleeve (15).

5. Gripping apparatus according to one of the claims 1 to 4, **characterised in that** it comprises at least one linear guide device (75) which is effective between the base body (5) and the sleeve-like fastening section (62) of the fastening sleeve (15) and by way of which the fastening sleeve (15) is guided in a linearly displaceable manner on axially sticking onto the base body (5) and on axially withdrawing from the base body (5) and by way of which the fastening sleeve (15) is supported in a non-rotatable manner with respect to the base body (5) in the position of use of the gripping unit (11) in which it is stuck onto the base body (5), wherein the linear guide device (75) appropriately comprises a guide groove (76), said guide groove being formed in an outer peripheral surface (14) of the base body (5) which faces radially outwards with respect to the center axis (4) and extending in the axis direction of the center axis (4), and a guide rib (77) which engages into the guide groove (76) in a slidingly displaceable manner and which is formed on a radial inner peripheral surface (64) of the sleeve-like fastening section (62) of the fastening sleeve (62), or vice versa.

6. Gripping apparatus according to claim 5, **characterised in that** the first locking structure (82) is arranged in the longitudinal course of the guide groove (76) of the linear guide device (75) and the second locking structure (83) is arranged in the longitudinal course of the guide rib (77) of the linear guide device (75).

7. Gripping apparatus according to one of the claims 1 to 6, **characterised in that** the inner peripheral surface (64) of the sleeve-like fastening section (62) of the fastening sleeve (15) and the section of the outer peripheral surface (14) of the base body (5), said section being encompassed by the sleeve-like fastening section (62) of the fastening sleeve (15) in the position of use of the gripping unit (11), are designed in a circularly cylindrical manner and complementarily to one another.

8. Gripping apparatus according to one of the claims 1 to 7, **characterised in that** at least one viewing window (95) passes through the sleeve-like fastening section (62) of the fastening sleeve (15), through which viewing window a light display device (92) is visible from the outside, said light display device being accommodated in the base body (5), visualising at least one operating state of the gripping apparatus (1) and being electrically actuatable.

9. Gripping apparatus according to one of the claims 1 to 8, **characterised in that** the fastening sleeve (15) at an axial front side (66) comprises a closed bottom section (65) which is arranged axially in front of the base body (5) at a front side in the position of use of the gripping unit (11).

10. Gripping apparatus according to one of the claims 1 to 9, **characterised in that** the gripping arms (18) each comprise a rear end section (12), with which they are fixed to the sleeve-like fastening section (62) of the fastening sleeve (15) in a pivotably movable manner whilst defining their respective pivoting region (17), wherein each gripping arm (18) with an axially opposite front end section which forms the gripping section (13) projects axially beyond the fastening sleeve (15).

11. Gripping apparatus according to one of the claims 1 to 10, **characterised in that** each gripping arm at its rear end section (12) is connected to the sleeve-like fastening section (62) of the fastening sleeve (15) as one piece and in a bending-flexible manner amid the formation of a solid-body joint (19), wherein expediently the complete gripping unit (11) consists of a plastic material.

12. Gripping apparatus according to one of the claims 1 to 11, **characterised in that** the fastening sleeve (15) comprises a front sleeve end section (68) which is designed in a sleeve-like manner and through whose wall several longitudinal slots (69) pass, said slots being distributed around the center axis wherein in each longitudinal slot one of the gripping arms (18) extends.

13. Gripping apparatus according to one of the claims 1 to 12, **characterised in that** the actuation device (26) is designed as a permanent-magnetic actuation device which comprises an external permanent magnet arrangement (27) with outer permanent magnet units (28) which are arranged on the gripping arms (18) and an inner permanent magnet arrangement (34) which interacts with this and which is surrounded by the gripping arms (18), wherein the inner permanent magnet arrangement (34) is a constituent of a movable actuation unit (35) of the permanent-magnetic actuation device (26a), said actuation unit being able to be positioned in different working positions relative to the base body (15) as well as relative to the gripping arms (18) by way of carrying out a working movement (36), so that the outer permanent magnet units are attracted or repelled by magnet forces for creating the gripping arm pivoting movements (22).

14. Gripping apparatus according to claim 13, **characterised in that** the base body (5) comprises a housing (37) which defines a housing chamber (38), in which the actuation unit (35) and expediently also a drive unit which is connected in drive to the actuation unit (35) are received, wherein the housing chamber (38) is expediently peripherally delimited by a housing side wall (42) which is non-magnetisable at least in the region of the actuation unit (35) and around which the actuation sleeve (15) with the gripping arms (18) which are arranged thereon is placed.

15. Gripping apparatus according to one of the claims 1 to 14, **characterised in that** it is provided with a sensor device (8) which is designed for detecting at least one operating state of the gripping apparatus (1), wherein the sensor device (88) is expediently capable of detecting at least one and in particular each pivoting position of each gripping arm (18), said pivoting position being adjustable by way of the gripping arm pivoting movements (22).

## Revendications

1. Dispositif de préhension comprenant un corps (5) de base et plusieurs bras (18) de préhension, montés sur le corps (5) de base en étant répartis autour d'un axe (4) central, dans lequel chaque bras (18) de préhension peut, en exécutant un mouvement (22) de pivotement de bras de préhension relativement au corps (5) de base, pivoter autour d'une partie (17) de pivotement et l'ensemble des bras (18) de préhension peut, par un dispositif (26) d'actionnement du dispositif (1) de préhension, être entraîné de manière synchrone, au choix, en un mouvement (22a) de pivotement rentrant, orienté vers l'intérieur dans la direction de l'axe (4) central, ou en un mouvement (22b) de pivotement sortant, orienté vers l'extérieur, en s'éloignant de l'axe (4) central, dans lequel les bras (18) de préhension sont intégrés dans une unité (11) de préhension distincte par rapport au corps (5) de base, qui a un manchon (15) de fixation portant l'ensemble des bras (18) de préhension et qui, par une partie (62) de fixation en forme de manchon du manchon (15) de fixation, est emmanchée sur le corps (5) de base dans la direction (4) central et, dans une position d'utilisation ainsi prise, est immobilisée de manière amovible sur le corps (5) de base par un dispositif (78) de sécurisation, dans lequel le dispositif (78) de sécurisation est formé d'au moins un dispositif (79) de verrouillage, qui a une première structure (82) de verrouillage montée sur le corps (5) de base et une deuxième structure (83) de verrouillage, complémentaire de la première structure (82) de verrouillage et montée sur la partie (62) de fixation en forme de manchon du manchon (15) de fixation, dans lequel l'une des deux structures (82, 83) de verrouillage est immobile et l'autre structure (83, 82) de verrouillage est mobile pour l'exécution d'une opération de verrouillage (82) et d'une opération de déverrouillage (83), **caractérisé en ce que** le dispositif (79) de verrouillage est constitué sous la forme d'un dispositif (79a) à déclic, dans lequel la première ou la deuxième structure (82, 83), mobile de verrouillage peut, pour le déverrouillage, être déployée élastiquement comme un ressort.

2. Dispositif de préhension suivant la revendication 1, **caractérisé en ce que** le manchon (15) de fixation peut être ou est emmanché sur le corps (5) de base par un mouvement (23) d'emmanchement purement linéaire pour prendre la position d'utilisation.

3. Dispositif de préhension suivant la revendication 1 ou 2, **caractérisé en ce que** le dispositif (78) de sécurisation est efficace entre le corps (5) de base et la partie (62) de fixation en forme de manchon du manchon (15) de fixation.

4. Dispositif de préhension suivant l'une des revendications 1 à 3, **caractérisé en ce que** la première structure (82) de verrouillage est montée de manière immobile sur le corps (5) de base et la deuxième structure (83) de verrouillage est montée mobile sur la partie (62) de fixation en forme de manchon du manchon (15) de fixation.

5. Dispositif de préhension suivant l'une des revendications 1 à 4, **caractérisé en ce qu'**il a, au moins entre le corps (5) de base et la partie (62) de fixation en forme de manchon du manchon (15) de fixation, au moins un dispositif (75) de guidage linéaire efficace, par lequel le manchon (15) de fixation, lors de l'emmanchement axial sur le corps (5) de base et lors du retrait axial du corps (5) de base, est guidé à possibilité de coulissement linéaire et par lequel le manchon (15) de fixation, dans la position d'utilisation emmanchée sur le corps (5) de base de l'unité (11) de préhension est appuyé, sans possibilité de tourner par rapport au corps (5) de base, dans lequel le dispositif (75) de guidage linéaire a, de manière appropriée, une rainure (76) de guidage, et constituée dans une surface (14) de pourtour extérieure, tournée vers l'extérieur radialement par rapport à l'axe (4) central du corps (5) de base et s'étendant dans la direction axiale de l'axe (4) central et une nervure (77) de guidage pénétrant, en glissant dans la rainure (76) de guidage, et constituée sur une surface (64) de pourtour intérieure radiale de la partie (62) de fixation en forme de manchon du manchon (62) de fixation ou inversement.

6. Dispositif de préhension suivant la revendication 5, **caractérisé en ce que** la première structure (82) de verrouillage est disposée dans le tracé longitudinal de la rainure (76) de guidage du dispositif (75) de guidage linéaire et la deuxième structure (83) de verrouillage est disposée dans le tracé longitudinal de la nervure (77) de guidage du dispositif (75) du guidage linéaire.

7. Dispositif de préhension suivant l'une des revendications 1 à 6, **caractérisé en ce que** la surface (64) de pourtour intérieure de la partie (62) de fixation en forme de manchon du manchon (15) de fixation et la partie, entourée dans la position d'utilisation de l'unité (11) de préhension, de la partie (62) de fixation en forme de manchon du manchon (15) de fixation, de la surface (14) de pourtour extérieure du corps (5) de base sont constituées en étant cylindriques de section circulaire et d'une manière complémentaire l'une de l'autre.

8. Dispositif de préhension suivant l'une des revendications 1 à 7, **caractérisé en ce que** la partie (62) de fixation en forme de manchon du manchon (15) de fixation est traversée par au moins une fenêtre (95) de visibilité, dans laquelle est visible de l'extérieur, un dispositif (92) d'affichage lumineux pouvant être actionné électriquement, logé dans le corps (5) de base et visualisant au moins un état de fonctionnement du dispositif (1) de préhension.

9. Dispositif de préhension suivant l'une des revendications 1 à 8, **caractérisé en ce que** le manchon (15) de fixation, a sur une face (66) avant axiale, une partie (65) de fond, fermée, qui, axialement sur une face (7) avant, est en avant du corps (5) de base dans la position d'utilisation de l'unité (11) de préhension.

10. Dispositif de préhension suivant l'une des revendications 1 à 9, **caractérisé en ce que** les bras (18) de préhension ont chacun un tronçon (12) d'extrémité arrière où, en définissant leur partie (17) de pivotement respective, ils sont fixés mobiles en pivotement sur la partie (62) de fixation en forme de manchon du manchon (15) de fixation, dans lequel chaque bras (18) de préhension fait saillie du manchon (15) de fixation par un tronçon d'extrémité avant opposé axialement, et formant un tronçon (13) de préhension.

11. Dispositif de préhension suivant l'une des revendications 1 à 10, **caractérisé en ce que** chaque bras de préhension est, sur son tronçon (12) d'extrémité arrière avec formation d'une articulation (19) monolithique, assemblé d'une pièce et souple en flexion, à la partie (62) de fixation en forme de manchon du manchon (15) de fixation, dans lequel opportunément, toute l'unité (11) de préhension est en une matière plastique.

12. Dispositif de préhension suivant l'une des revendications 1 à 11, **caractérisé en ce que** le manchon (15) de fixation a une partie (68) avant de manchon, constituée en forme de manchon, dont la paroi est traversée par plusieurs fentes (69) longitudinales, réparties autour du centre, dans lesquelles s'étend respectivement l'un des bras (18) de préhension.

13. Dispositif de préhension suivant l'une des revendications 1 à 12, **caractérisé en ce que** le dispositif (26) d'actionnement est constitué sous la forme d'un dispositif (26a) d'actionnement à aimantation permanente, qui comprend un agencement (27) extérieur d'aimant permanent ayant des unités (28) extérieures d'aimant permanent, montées sur les bras (18) de préhension, et un agencement (34) intérieur d'aimant permanent coopérant ainsi et entouré des bras (18) de préhension, dans lequel l'agencement (34) intérieur d'aimant permanent fait partie d'une unité (35) mobile d'actionnement du dispositif (26a) d'actionnement à magnétisme permanent, qui peut, par exécution d'un mouvement (36) de travail par rapport tant au corps (5) de base qu'également aux bras (18) de préhension, être mise en position dans des positions de travail différentes, de manière à ce que les unités extérieures d'aimant permanent soient attirées ou repoussées par des forces magnétiques pour provoquer les mouvements (22) de pivotement de bras de préhension.

14. Dispositif de préhension suivant la revendication 13, **caractérisé en ce que** le corps (5) de base a une enveloppe (37) qui définit une chambre (38) d'enveloppe, dans laquelle le dispositif (35) d'actionnement et, de manière appropriée également, une unité d'entraînement, reliée en entraînement à l'unité (35) d'actionnement, sont reçus, dans lequel la chambre (38) d'enveloppe est délimitée de manière appropriée périphériquement par une paroi (42) latérale d'enveloppe, non magnétisable, au moins dans la partie de l'unité (35) d'actionnement, autour de laquelle le manchon (15) d'actionnement, avec les bras (18) de préhension qui y sont montés, est placé.

15. Dispositif de préhension suivant l'une des revendications 1 à 14, **caractérisé en ce qu'**il est équipé d'un dispositif (88) capteur, constitué pour la détection d'au moins un état de fonctionnement du dispositif (1) de préhension, dans lequel le dispositif (88) capteur est de manière appropriée en mesure de détecter au moins une et en particulier chaque position de pivotement, réglable par les mouvements (22) de pivotement de bras de préhension de chaque bras (18) de préhension.
